# EUROPEAN PATENT SPECIFICATION

(11) **EP 4 446 952 B1**
(45) Date of publication and mention of the grant of the patent: **01.04.2026**
(21) Application number: 24170249.7
(22) Date of filing: 15.04.2024
(51) Int. Cl.: G06Q 10/047

(54) **SYSTEM AND METHOD FOR GENERATING AND USING DYNAMIC GEOFENCE AREAS IN A FLEET MANAGEMENT SYSTEM**
SYSTEM UND VERFAHREN ZUR ERZEUGUNG UND VERWENDUNG DYNAMISCHER GEOFENCE-BEREICHE IN EINEM FLOTTENVERWALTUNGSSYSTEM
SYSTÈME ET PROCÉDÉ DE GÉNÉRATION ET D'UTILISATION DE ZONES DE GÉOREPÉRAGE DYNAMIQUE DANS UN SYSTÈME DE GESTION DE FLOTTE

(30) Priority: 13.04.2023 US 202363495793 P; 12.04.2024 US 202418634428
(43) Date of publication of application: 16.10.2024
(73) Proprietor: Tracematics Limited, D11 KXN4 Dublin (IE)
(72) Inventor: HUGHES, Liam, Dublin (IE); SMITH, Ian, Dublin (IE); BRADY, Colm, Dublin (IE)
(74) Representative: FRKelly

(56) References cited:
- CN-A- 107 810 512
- US-A1- 2022 392 342

## Description

### BACKGROUND

Vehicle telematics is the technology of sending, receiving, and storing information relating to vehicles via telecommunication devices and networks. It usually involves installing onboard units (OBUs) in vehicles, and these OBUs are capable of communicating directly with the vehicle. Further, these OBUs are capable of communicating with a telematics service provider using a standardized telecommunications network (e.g., public 4G or 5G, private Wi-Fi). The on-board unit may include a global navigation satellite system (e.g., GPS, Galileo) receiver unit that is capable of determining the vehicle's location (e.g., its longitude and latitude). The on-board unit may also include basic computing resources (e.g., a processor, memory, storage).

The application and use of vehicle telematics has expanded considerably in recent years, a development partly attributed to technological enhancements and reductions in associated costs. This technology may improve or augment the operational efficiency of vehicles, both on an individual and fleet-wide basis, thereby benefiting individuals and corporations reliant on vehicular transport.

Rental or leasing companies are at the forefront of realizing the benefits of utilizing vehicle telematics, and indeed the rental or leasing industry is changing due to the implementation, and additional capabilities, of vehicle telematics. The benefits of vehicle telematics to the rental or leasing industry include efficiency gains, reduced revenue loss, and increased revenue generation.

Document US 2022/392342 A1 discloses a computer-implemented method for analysing abnormal traffic conditions. CN 107 810 512 A relates to receiving location information for an item.

### SUMMARY

Various aspects include methods of generating and using dynamic geofence areas in a fleet management system, which may include receiving information relating to an environmental event, generating a dynamic geofence area, receiving a location from an on-board telematics unit of a vehicle, determining the dynamic geofence state of the vehicle using the received location, and performing an action in response to determining that the vehicle may be in a dynamic geofence state.

In some aspects, generating a dynamic geofence area may include generating a dynamic geofence area that contains a validity period. In some aspects, generating a dynamic geofence area may include generating a dynamic geofence area that may be associated with an environmental event type. In some aspects, generating a dynamic geofence area that contains a type may include generating a dynamic geofence area that contains a weather type. In some aspects, generating a dynamic geofence area may include generating additional data using the received information relating to an environmental event, and generating a dynamic geofence area using the generated additional data.

In some aspects, determining the dynamic geofence state of the vehicle using the received location may include determining the dynamic geofence state of the vehicle in response to receiving a notification indicating that a new dynamic geofence area has been generated. In some aspects, determining the dynamic geofence state of the vehicle using the received location may include determining the velocity of the vehicle and determining the dynamic geofence state of the vehicle using the received location and the determined velocity. In some aspects, determining the dynamic geofence state of the vehicle using the received location may include retrieving previous locations of the vehicle, and determining the dynamic geofence state of the vehicle using the received location and the retrieved locations. In some aspects, determining the dynamic geofence state of the vehicle using the received location and the retrieved locations may include determining that the dynamic geofence state of the vehicle may be that the vehicle was in a dynamic geofence area. In some aspects, determining the dynamic geofence state of the vehicle using the received location may include determining that the dynamic geofence state of the vehicle may be that the vehicle enters a dynamic geofence area. In some aspects, determining the dynamic geofence state of the vehicle using the received location may include retrieving a user-defined condition, evaluating the user-defined condition, and determining the dynamic geofence state of the vehicle using the evaluated user-defined condition.

In some aspects, performing the action in response to determining that the vehicle may be in a dynamic geofence state may include determining a rental status of the vehicle, and performing the action in response to determining that the vehicle may be in a dynamic geofence state and the determined rental status of the vehicle. In some aspects, performing the action in response to determining that the vehicle may be in a dynamic geofence state may include sending an alert to the on-board telematics unit of the vehicle. In some aspects, sending an alert to the on-board telematics unit of the vehicle may include sending an alert to the on-board telematics unit of the vehicle that causes the vehicle to display an alert on the dashboard. In some aspects, sending an alert to the on-board telematics unit of the vehicle may include sending an alert to the on-board telematics unit of the vehicle that causes the vehicle to display an augmented reality alert on a windscreen. In some aspects, sending an alert to the on-board telematics unit of the vehicle may include sending an alert to the on-board telematics unit of the vehicle that causes the vehicle to update its route guidance.

In some aspects, sending an alert to the on-board telematics unit of the vehicle may include sending an alert that causes the on-board telematics unit of the vehicle to collect, from sensors of the vehicle, information that may be suitable for determining whether the vehicle may be driving autonomously, or sending an alert to the on-board telematics unit of the vehicle that causes the vehicle to disable autonomous driving in response to determining that the vehicle may be driving autonomously. In some aspects, sending an alert to the on-board telematics unit of the vehicle may include determining that the vehicle may be capable of driving autonomously, determining a specific location, and sending an alert to the on-board telematics unit of the vehicle that causes the vehicle to drive autonomously to the specific location. In some aspects, performing the action in response to determining that the vehicle may be in a dynamic geofence state may include updating a record associated with the vehicle in the fleet management system. In some aspects, updating a record associated with the vehicle in the fleet management system may include updating the record with the dynamic geofence area type, and updating the record with a notification to inspect the vehicle when it may be returned to a rental location.

Further aspects may include a computing device having a processor or processing system configured with processor-executable instructions to perform various operations corresponding to the methods discussed above. Further aspects may include a computing device having various means for performing functions corresponding to the method operations discussed above. Further aspects may include a non-transitory processor-readable storage medium having stored thereon processor-executable instructions configured to cause a processor or processing system to perform various operations corresponding to the method operations discussed above.

### BRIEF DESCRIPTION OF THE DRAWINGS

The accompanying drawings, which are incorporated herein and constitute part of this specification, illustrate exemplary aspects of the invention, and together with the general description given above and the detailed description given below, serve to explain the features of the invention.
FIGs. 1A-1C are component diagrams that illustrate various dynamic geofence areas of different sizes, shapes, and locations, representing a single environmental event, at sequential times in accordance with some embodiments.
FIG. 2 is a component diagram that illustrates multiple dynamic geofence areas of different shapes and sizes in the same location at a single time in accordance with some embodiments.
FIG. 3 is an activity diagram illustrating an overview of a method of dynamically creating and using dynamic geofence areas based upon environmental events in accordance with various embodiments.
FIG. 4 is a process flow diagram illustrating a method of generating dynamic geofence areas in accordance with some embodiments.
FIGs. 5A and 5B are process flow diagrams illustrating a method of determining one or more dynamic geofence areas for use in determining the dynamic geofence states in accordance with some embodiments.
FIGs. 6A and 6B are process flow diagrams illustrating methods of determining the dynamic geofence state of a vehicle location relative to a dynamic geofence area.
FIGs. 7A-7D are process flow diagrams illustrating various methods of performing actions in response to determining that a vehicle is in a dynamic geofence state associated with a dynamic geofence area.
FIGs. 8A-8B are tables that illustrate dynamic geofence states and their associated actions in accordance with some embodiments.
FIGs. 9A-9C are component diagrams that illustrate various actions that may be performed when a vehicle changes its dynamic geofence state in accordance with some embodiments.
FIG. 10 is a component diagram of a server computing device suitable for use with the various embodiments.
FIG. 11 is a component diagram of a system on chip (SOC) suitable for implementing some embodiments.

### DESCRIPTION

The various embodiments will be described in detail using the accompanying drawings. Wherever possible, the same reference numbers will be used throughout the drawings to refer to the same or similar parts. References to particular examples and implementations are for illustrative purposes and are not intended to limit the scope of the invention or the claims.

In overview, the various embodiments include methods, and computing devices and systems configured to implement the methods, of managing vehicle responses to dynamic geofence areas influenced by environmental events. In some embodiments, a processor or processing system in a computing device may be configured with processor-executable instructions to perform operations that include receiving environmental event data indicative of one or more environmental events, using the received environmental event data to determine the need for generating or adjusting dynamic geofence areas, intelligently identifying and discarding irrelevant data to focus on the most relevant environmental event information, using techniques such as interpolation to enhance the granularity of the received environmental event data, using machine learning algorithms to predict future environmental events, and generating predictive dynamic geofence areas and their associated validity periods based on the enhanced and predicted environmental event data.

In some embodiments, the processor or processing system in the computing device may be further configured to collect vehicle information from onboard units (OBUs) and rental systems (including location, velocity, and rental status of the vehicles), use the collected vehicle information to determine a dynamic geofence state of each vehicle in relation to the dynamic geofence areas and/or execute state-specific actions (e.g., sending alerts, immobilizing the vehicle, adapting route guidance, enabling/disabling autonomous driving modes, etc.) for each vehicle based on the determined dynamic geofence state.

The word "exemplary" is used herein to mean "serving as an example, instance, or illustration." Any implementation described herein as "exemplary" is not necessarily to be construed as preferred or advantageous over other implementations.

The terms "component," "system," and the like may be used herein to refer to a computer-related entity, such as hardware, firmware, a combination of hardware and software, software, or software during its execution. These entities may be configured to carry out specific operations or functionalities. For example, a component may encompass a process operating on a processor, a processor itself, an object, an executable, a thread of execution, a program, or a computing device. As an illustrative example, both an application running on a computing device and the computing device itself could be termed a component. One or more components may be situated within a process and/or thread of execution and/or may be localized on a single processor or core or distributed across multiple processors or cores. In addition, these components may execute from various non-transitory computer-readable media having various instructions and/or data structures stored thereon. Components may communicate by way of local and/or remote processes, function or procedure calls, electronic signals, data packets, memory read/writes, and other known computer, processor, and/or process-related communication methodologies.

The term "computing device" may be used herein to refer to any or all of server computing devices, personal computing devices, desktop computers, workstations, laptops, netbooks, Ultrabooks, tablets, smartphones, personal data assistants (PDAs), palm-top computers, wearable devices, multimedia-enabled mobile devices, Internet of Things (IoT) devices (e.g., smart TVs, speakers, locks, lighting systems, switches, doorbell cameras, and security systems, etc.), vehicles (e.g, automobiles, etc.), advanced driver-assistance systems (ADAS), engine control units (ECUs), infotainment systems, and other similar chips or devices that include a memory and programmable processor for providing the functionality described herein.

The term "processing system" may be used herein to refer to one or more processors, including multi-core processors, that are organized and configured to perform various computing functions. Various embodiment methods may be implemented in one or more of multiple processors within a processing system as described herein.

The terms "mobile device," "wireless device," and "user equipment (UE)" may be used interchangeably and may refer to any of a wide variety of electronic devices capable of wireless communication, including cellular phones, smartphones, personal data assistants (PDAs), palm-top computers, tablet computers, laptops, wireless email receivers, VoIP phones, wire-line devices, devices incorporating Machine-to-Machine (M2M) technology, multimedia and Internet-enabled phones, and similar electronic devices capable of sending and receiving wireless communication signals. A wireless device may include a programmable processor and memory. In a preferred embodiment, the wireless device is a cellular handheld device (e.g., a mobile device), which may communicate via a cellular telephone communications network.

The terms "machine learning algorithm," "artificial intelligence model" and the like may be used herein to refer to any of a variety of information structures that may be used by a computing device to perform a computation or evaluate a specific condition, feature, factor, dataset, or behavior on a device. Examples of machine learning (ML) algorithms include network models, neural network models, inference models, neuron models, classifiers, random forest models, spiking neural network (SNN) models, convolutional neural network (CNN) models, recurrent neural network (RNN) models, deep neural network (DNN) models, generative network models, ensemble networks, generative adversarial networks, and genetic algorithm models. In some embodiments, a machine learning algorithm may include an architectural definition (e.g., the neural network architecture, etc.) and one or more weights (e.g., neural network weights, etc.).

The term "neural network" may be used herein to refer to an interconnected group of processing nodes (or neuron models) that collectively operate as a software application or process that controls a function of a computing device and/or generates an overall inference result as output. Individual nodes in a neural network may attempt to emulate biological neurons by receiving input data, performing simple operations on the input data to generate output data, and passing the output data (also called "activation") to the next node in the network. Each node may be associated with a weight value that defines or governs the relationship between input data and output data. A neural network may learn to perform new tasks over time by adjusting these weight values. In some cases, the overall structure of the neural network and/or the operations of the processing nodes do not change as the neural network learns a task. Rather, learning is accomplished during a "training" process in which the values of the weights in each layer are determined. As an example, the training process may include causing the neural network to process a task for which an expected/desired output is known, comparing the activations generated by the neural network to the expected/desired output, and determining the values of the weights in each layer based on the comparison results. After the training process is complete, the neural network may begin "inference" to process a new task with the determined weights.

The term "inference" may be used herein to refer to a process that is performed at runtime or during execution of the software application program corresponding to the machine learning algorithm. Inference may include traversing the processing nodes in a network (e.g., neural network, etc.) along a forward path (which may include some backwards traversals) to produce one or more values as an overall activation or overall "inference result".

The terms "rental or leasing system" (RLS) and "fleet management system" may be used interchangeably and refer to a component or computerized system that may be used by rental or leasing companies for managing vehicle rentals or leases. These systems may be configured to track the rental status of vehicles in real-time, manage rental contracts, maintain a comprehensive record of vehicle attributes, and/or provide the rental status of any vehicle at any time (e.g., "ON-RENT," "AVAILABLE"). For example, if a vehicle is being rented, the RLS may create and associate a rental contract with the vehicle for the duration of its rental. The RLS may contain a record of all attributes for each vehicle (e.g., make, model, year of manufacture, registration number, milage/kilometrage, driver alert features, autonomous driving capabilities, etc.).

The term "telematics service provider" (TSP) may be used herein to refer to a component or computerized system that is configured to provide vehicle telematic services, which are typically implemented using "onboard units" (OBUs) installed within vehicles. These units may have the capability to communicate directly with the vehicle and to connect with the telematics service provider over standardized telecommunications networks (for example, public 4G or 5G, private Wi-Fi). OBUs may be equipped with receivers for global navigation satellite systems (such as GPS and Galileo), enabling precise location tracking of the vehicle (including its longitude and latitude). In addition, OBUs may transmit data regarding the status of the vehicle (for example, whether it is on, doors are locked, etc.) and dynamics (e.g., speed and impact forces, etc.) to the TSP. These units may also include computing resources (including processors, memory, storage), may be integrated into vehicles during the manufacturing process, with vehicle manufacturers providing access to these units through an application programming interface (API). Alternatively, OBUs may be installed by a third party (such as a rental or leasing company) after manufacture. Ownership or operation of the TSP may be under the purview of the rental or leasing company or an independent third party.

The term "geofence" may be used herein to refer to a virtual perimeter for a real-world geographic area, and the term "geofence area" may be used herein to refer to a geographical area contained within one or more geofences. The geofence area may be of any shape (e.g., circle, square, polygon, freeform). Geofence areas may be used to identify rental stations, areas within rental stations (e.g., return bay, cleaning stations), gasoline/petrol stations, etc.

The term "dynamic geofence state" may be used herein to refer to an operational status that characterizes the spatial relationship and interaction between a vehicle and a defined dynamic geofence area. A dynamic geofence state may include information that identifies, encompasses, and/or characterizes various stages of the vehicle's engagement with the geofence (e.g., from approaching its perimeter to exiting its boundaries). For example, dynamic geofence states may identify or characterize vehicle interactions with geofenced areas, such as a vehicle entering a dynamic geofence area, exiting a dynamic geofence area, and being in a dynamic geofence area. Dynamic geofence states such as "approaching," "entering," "inside," "exiting," "exited," and other more granular sub-states provide a framework for implementing geofence-based rules and policies. These states may identify the vehicle's current position relative to the geofence area, its past interactions with the geofence area, and potential future movements within or around the geofenced area. Various embodiments include components configured to monitor, generate, update, adjust, control, and/or use dynamic geofence states to identify and implement proactive and/or reactive actions that are situational and context aware and tailored to the specific event or situation.

Each dynamic geofence state may be associated with an action, each action may be associated with a condition, and each condition may be associated with a specific dynamic geofence area or a specific event type (e.g., an environmental event associated with extreme weather may be differentiated from an environmental event associated with civil unrest). The actions may be stored in the repository of dynamic geofence states and/or in a local or remote repository of actions.

The terms "environmental events" and "hostile events" may be used interchangeably herein to refer to events or phenomena that affect human society, infrastructure, or the natural environment, encompassing both natural disasters (e.g., hurricanes, earthquakes, floods, blizzards, wildfires, etc.) and human-induced incidents (e.g., civil unrest, terrorist attacks, military conflicts, etc.). Environmental events may vary in duration and severity, from short-lived instances of civil unrest to prolonged situations such as war zones. They pose challenges to emergency response, public safety, and disaster preparedness, necessitating coordinated efforts from local, national, and international bodies to mitigate their effects and aid affected populations. The impact of these events on human well-being, communities, and the environment underscores the importance of a collective response from entities such as government agencies, emergency services, and private organizations. Various conventional systems, including weather forecasting services, public advisories, and national emergency centres, play important roles in detecting, predicting, and communicating information about these events. Some embodiments may include components configured to implement or use these and other conventional systems.

Frequently, individuals rent vehicles and, whether knowingly or otherwise, enter areas subjected to environmental events. Individuals may drive into regions already experiencing such events (e.g., areas of flooding, etc.), or they might find themselves in areas where such events occur unexpectedly (e.g., a sudden earthquake, etc.). Often, renters are unaware that they are in a zone affected by an environmental event, placing themselves and any passengers at risk. In severe instances, this risk could prove fatal. In addition, these situations may impose further strain and hazard on emergency services and first responders already operating under stressful conditions.

Environmental events may lead to vehicle damage and/or otherwise present financial challenges to rental or leasing companies. Typically, the responsibility for repairing damage falls on the rental or leasing companies unless the damage results from the renter's failure to adhere to the rental agreement, such as ignoring directives from policing authorities. For example, while the cost of replacing broken windows may be covered by the rental or leasing company, this would not apply if the vehicle were deliberately driven into a restricted area. Determining the specifics of such situations may prove challenging for many rental or leasing companies.

Another factor contributing to the financial burden on rental or leasing companies is the timing of damage identification. Renters are usually liable for damages noticed upon the vehicle's return as stipulated in the rental contract. However, the company bears the repair costs if neither the renter nor the company detects the damage at that time (e.g., paintwork damage unnoticed or concealed by darkness upon return, etc.). In extreme scenarios, vehicles may be nearly destroyed, further exacerbating the financial and operational difficulties faced by rental or leasing companies.

Consequently, it would be advantageous for rental or leasing companies to implement mechanisms or systems aimed at alerting renters to areas currently affected by environmental events. Such systems would not only enhance the safety and awareness of renters but could also play an important role in mitigating the financial repercussions of vehicle damage caused by environmental events. Systems that proactively inform renters of potential risks and hazards associated with environmental events could significantly reduce the likelihood of vehicles entering affected areas. This, in turn, may reduce instances of vehicle damage and help alleviate the financial strain on these companies. These systems may also reduce the burden on emergency services and first responders by reducing the number of vehicles exposed to environmental events.

For conciseness and ease of reference, the discussion of the embodiments herein may use the term "time" to reference both time and date. The various embodiments include components configured to implement and use "dynamic geofences" to define "dynamic geofence areas." These dynamic geofences and dynamic geofence areas may include temporal information that augments or builds upon conventional geofences and geofence areas. For example, a dynamic geofence area may be defined by a start time and an end time. The start and end times may be used to determine the period during which the dynamic geofence area remains valid and/or may collectively define a validity period (or duration) of the existence of the dynamic geofence area. In addition to the temporal information discussed above, these dynamic geofences and areas may also be associated with an environmental event type (e.g., hurricane, flooding, riot, etc.), an associated severity value, and with the emergency contact details of the most relevant authorities (e.g., fire services for environmental events relating to wildfires, etc.).

The various embodiments include computing devices equipped with components (or processors, processing systems, etc.) configured to use dynamic geofence states to monitor and manage vehicle movements in relation to dynamic geofence areas, improve context and situational awareness for targeted responsive actions tailored to specific events or conditions, provide stakeholders with insights into vehicle movements, enhance operational strategies, and/or improve vehicle safety in settings impacted by environmental events. For these and other reasons, the various embodiments may improve the performance and functioning of the computing devices, networks, and systems that are used by and/or otherwise associated with a rental or leasing company.

In some embodiments, the components may be configured to dynamically manage vehicle interactions with environmental event-affected areas by generating dynamic geofence areas, receiving and processing vehicle and renter data, analyzing vehicle proximity to dynamic geofence areas, and initiating responsive actions. In some embodiments, the components may receive and use feedback from OBUs and/or the rental or leasing systems to update their operation, adjust dynamic geofence parameters, change response strategies, etc.

In some embodiments, the components may be configured to generate dynamic geofence area information structures, which in some embodiments may include receiving data related to environmental events from one or more external sources, using machine learning models to analyze the received environmental event data (e.g., and interpolate additional data points, predict future environmental events, associate the dynamic geofence area with an environmental event type, severity, validity period, etc.), and generating one or more dynamic geofence areas based on an output of the machine learning model. The components may store the generated dynamic geofence areas in a database accessible by a telematics service provider and/or update fleet management systems with the dynamic geofence area information.

In some embodiments, the components may be configured to continuously (or repeatedly) receive vehicle data that includes location, speed, and vehicle status information from onboard units (OBUs) installed in vehicles, obtain renter information and rental contract terms from a rental or leasing system database, associate the received vehicle data with the corresponding renter information and rental contract terms, and store the combined vehicle and renter data in a secure data storage system for subsequent analysis.

In some embodiments, the components may be configured to analyze a vehicle's proximity to dynamic geofence areas and initiate responsive actions. The components may determine each vehicle's proximity to dynamic geofence areas by, for example, analyzing the vehicle's current location against stored dynamic geofence areas. The components may assign a dynamic geofence state to each vehicle based on its movement and location relative to the dynamic geofence areas and initiate vehicle actions based on the assigned dynamic geofence state (e.g., by deploying alerts to the vehicle's onboard unit, adjusting the vehicle's navigation system, disabling autonomous driving features, instructing the vehicle to move to a predetermined safe location, etc.). The components may send notifications to a rental or leasing system regarding the vehicle's dynamic geofence state (e.g., to prompt vehicle inspection upon return, etc.). In some embodiments, the components may be configured to apply charges for any rental contract violations.

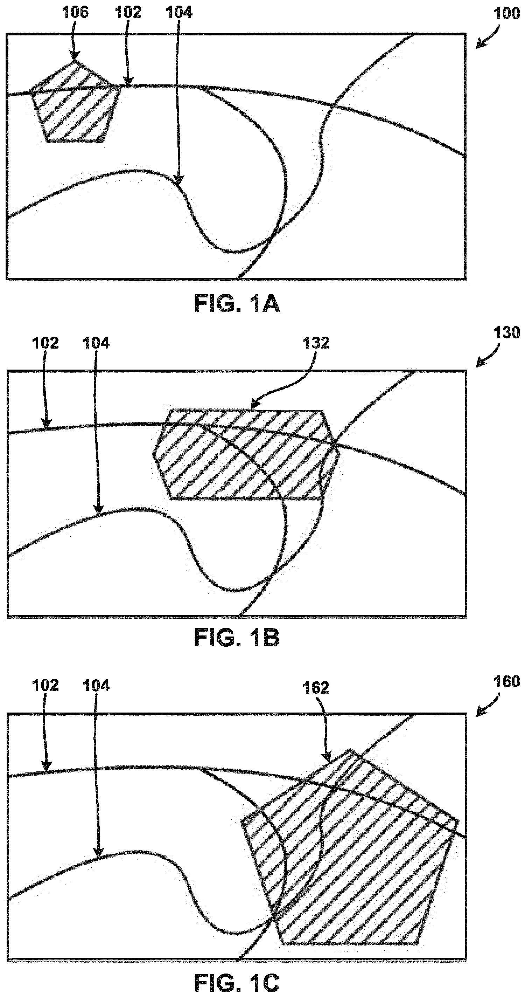

FIGs. 1A-1C are component diagrams that illustrate various dynamic geofence areas of different sizes, shapes, and locations, representing a single environmental event, at sequential times in accordance with some embodiments. The validity periods of the dynamic geofence areas may overlap with each other.

Specifically, FIG. 1A illustrates a geographical area 100 that contains a road 102 and a river 104. Further, there is a dynamic geofence area 106 that represents an environmental event. The dynamic geofence area 106 has the shape of a pentagon. The dynamic geofence area 106 includes some of the road 102.

FIG. 1B illustrates the same geographical area 130, which contains the same road 102 and river 104. Further, there is a dynamic geofence area 132 that represents the same environmental event at a later time. The size and shape of the dynamic geofence area 132 have changed in relation to the dynamic geofence area 106 illustrated in FIG. 1A. The dynamic geofence area 132 illustrated in FIG. 1B includes some of the road 102 and river 104.

FIG. 1C illustrates the same geographical area 160, which contains the same road 102 and river 104. Further, there is a dynamic geofence area 162 that represents the same environmental event at an even later time. The size and shape of the dynamic geofence area 162 have changed in relation to the dynamic geofence areas 106 and 132 illustrated in FIGs. 1A and 1B. The dynamic geofence area 162 illustrated in FIG. 1C includes more of the road 102 and river 104 compared to the dynamic geofence areas 106 and 132 illustrated in FIGs. 1A and 1B.

Thus, FIGs. 1A-1C illustrate the progressive transformation of a dynamic geofence in response to a specific environmental event. The dynamic geofences establish a virtual boundary that serves as a cautionary perimeter and/or identifies an area as requiring special attention for vehicle surveillance, safety monitoring, etc. FIGs. 1A-1C also illustrate the flexibility of the dynamic geofences and their capability to adjust in size, form, and position responsive to the evolving changes of the environmental event. The overlapping validity periods of the geofences may allow for a continuous adaptation of the geofenced area as the event evolves.

Some embodiments may include processing systems (or components, processors, etc.) configured to dynamically manage geofenced areas in response to environmental events. The processing system may be configured to receive environmental event data that is indicative of an environmental event within a geographical area, analyze the environmental event data to determine the status of the environmental event, use the analysis results to generate a dynamic geofence area that includes a perimeter that delineates a portion of the geographical area affected by the environmental event, associate the dynamic geofence area with a validity period that defines a timeframe during which the dynamic geofence area is active, adjust the dynamic geofence area (e.g., in terms of size, shape, position, etc.) based on a continuous analysis of updated environmental event data and/or in response to detecting a change in the status of the environmental event, store the adjusted dynamic geofence area and the associated validity period in memory, and communicate the dynamic geofence area and the associated validity period to a vehicle telematics system. In some embodiments, the processing system may also determine an intersection of validity periods of subsequent dynamic geofence areas to facilitate a continuous adaptation of the geofenced area as the environmental event evolves. In some embodiments, the processing system may cause or perform a responsive action in response to detecting (e.g., based on location data, etc.) a change in vehicle state. For example, the processing system may cause a notification to be sent to user devices in response to determining (e.g., based on location data, etc.) that the vehicle is entering, residing in, or exiting the dynamic geofence area.

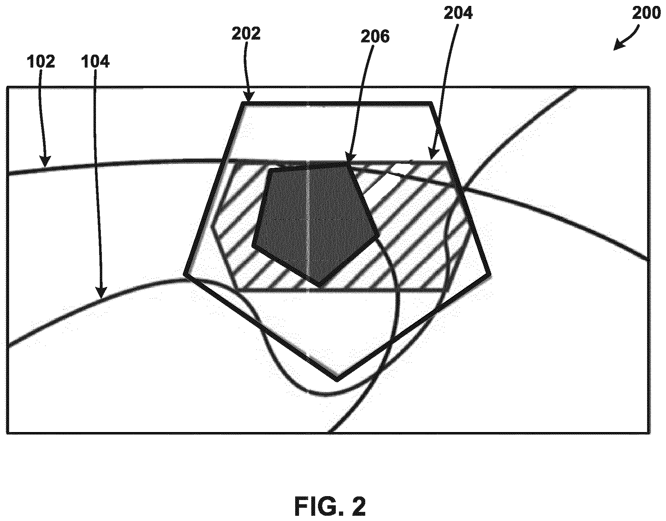

FIG. 2 is a component diagram that illustrates multiple dynamic geofence areas of different shapes and sizes in the same location 200 at a single time in accordance with some embodiments. For example, dynamic geofence areas 202, 204, 206 may represent environmental events of flooding. Dynamic geofence area 202 may represent light flooding, dynamic geofence area 204 may represent moderate flooding, and dynamic geofence area 206 may represent severe flooding. The dynamic geofence areas 202, 204, and 206 include some of the road 102 and river 104.

The inclusion of multiple dynamic geofence areas at a single point in time may allow the processing system to monitor and manage multiple or concurrent environmental events and/or implement any of a multitude of responsive actions and strategies.

In some embodiments, the processing system may be configured to use distinct and independent dynamic geofence states to concurrently manage, represent, understand, or characterize multiple stages of an environmental event (e.g., flooding, etc.) in a single geographical area. In some embodiments, the processing system may assign varying degrees of severity (e.g., from light rain to severe flooding, etc.) to each geofence area. In some embodiments, the processing system may implement or tailor its responsive actions based on the specific conditions and/or degree of severity associated with each geofence area.

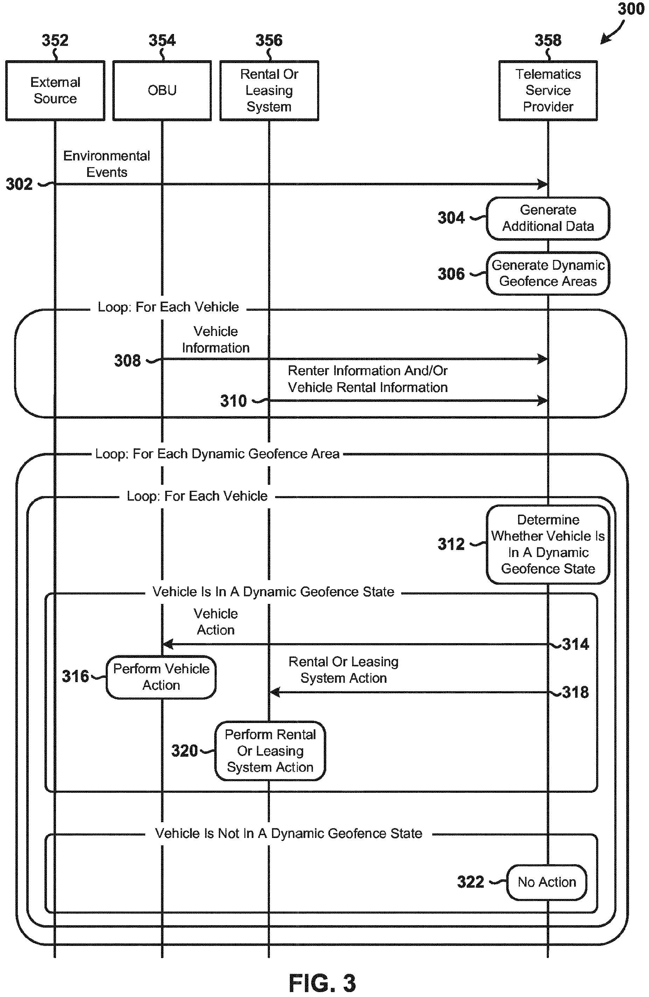

FIG. 3 is an activity diagram illustrating a method 300 of dynamically creating and using dynamic geofence areas based upon environmental events in accordance with some embodiments. All or portions of method 300 may be performed by a processor or processing system included in a computing system, which may be included in or associated with a vehicle, a rental or leasing system, and/or a telematics service provider. In the example illustrated in FIG. 3, method 300 includes three distinct phases. The telematics service provider may generate dynamic geofence areas in the first phase (i.e., operations 302-306), receive vehicle details in the second phase (i.e., operations 308-310), and use the generated dynamic geofence areas and the received vehicle details to perform vehicle analysis operations in the third phase (i.e., operations 312-322).

In the first phase, in operation 302, the telematics service provider may receive one or more environmental events from an external source (e.g., weather forecast systems, public authorities, national emergency response centers). Operation 302 may be performed using any well-known data exchange techniques (e.g., using a subscribe and publish REST API). In operation 304, the telematics service provider may use the received environmental events to generate additional data (e.g., if the received environmental events had hourly granularity, then the telematics service provider may perform interpolation in order to generate environmental events with 15-minute granularity; if the received environmental events occurred in the past or present, then the telematics service provider may use a machine learning algorithm in order to generate future environmental events). In operation 306, the telematics service provider may generate one or more dynamic geofence areas using the received environmental events and/or the generated additional data. Each of the dynamic geofence areas may include a validity period and an environmental event type.

In an embodiment, the telematics service provider may discard some of the received environmental events in response to determining that they are not needed (e.g., as part of operations 304-306).

In the second phase, in operation 308, the telematics service provider may receive vehicle information from the on-board unit of a vehicle. This vehicle information may include location, velocity, impact, ignition state, door lock state, etc.

In operation 310, the telematics service provider may receive renter and vehicle rental information from the rental or leasing system. The renter information may include the name, phone number, email address, nationality, driving license details, loyalty details, emergency contact details, etc. of each driver and passenger. This vehicle information may include rental status, contract terms, insurance cover details, vehicle attributes, etc. Operations 308 and 310 may be repeatedly performed for each vehicle that needs to be analyzed (e.g., all vehicles, vehicles rented or leased in a specific region or country). Further, the telematics service provider may store the information received in operations 308 and 310 (e.g., in a cache, database).

In the third phase, the telematics service provider may repeatedly perform operations 312-322 for each vehicle in each dynamic geofence area. In operation 312, the telematics service provider may determine whether the current vehicle is in a dynamic geofence state relative to the current dynamic geofence area. For example, the telematics service provider may analyse the vehicle's location data in real-time to determine its proximity to, or presence within, a dynamic geofence area defined for an environmental event (e.g., a flood, wildfire, heavy snowfall, etc.). This analysis may include comparing the vehicle's current GPS coordinates with the geographic boundaries of the dynamic geofence areas stored in the system. If the vehicle's location is within the boundaries of a dynamic geofence area, the telematics service provider may further assess the vehicle's trajectory and speed to predict whether it is moving towards a more severe zone within the geofence, stationary, or exiting the area. The telematics service provider may use this information to classify the vehicle's state as approaching, entering, within, exiting, exited, etc.

In response to determining that the current vehicle is in a dynamic geofence state relative to the current dynamic geofence area, the telematics service provider may send one or more vehicle actions to the on-board unit of the vehicle in operation 314. Examples of vehicle actions include, but are not limited to, displaying an alert to the driver (e.g., on the dashboard, on a mirror, on the windscreen/windshield using augmented reality), emitting an audio warning (e.g., using the infotainment system in the vehicle), updating route guidance information, disabling autonomous driving, and instructing the vehicle to drive autonomously to a safe location. In operation 316, the on-board unit may cause the vehicle to perform the received vehicle actions.

As mentioned above, in operation 314 the telematics service provider may send one or more vehicle actions to the on-board unit of the vehicle. In an embodiment, the vehicle action may cause the OBU in the vehicle to collect sensor or environmental data at the vehicle and send it back to the telematics service provider, who may then use it as part of operation 306 to generate, update, or validate one or more dynamic geofence areas. For example, if an area is supposed to be experiencing heavy rain leading to flooding, the telematics service provider could collect information on the wipers being activated (assuming the vehicle is operating) and use the collected data to verify the accuracy of one or more of the previously generated dynamic geofence areas.

In operation 318, the telematics service provider may send one or more rental or leasing system actions to the rental or leasing system. The rental or leasing system actions may include, but are not limited to, sending an alert to a manager in the rental or leasing company, sending an alert to the driver (e.g., SMS, instant message, email), updating the rental or leasing system with a notification to inspect the vehicle upon its return to the rental or leasing company, and updating the rental or leasing system with an additional charge to the renter due to the renter violating the terms of the rental contract (e.g. if the renter brought the vehicle to an area that was explicitly forbidden in the rental contract). In operation 320, the rental or leasing system may perform the received rental or leasing system actions.

In an embodiment, the telematics service provider may perform any or all of the vehicle actions (i.e., operations 314-316) and/or rental or leasing system actions (i.e., operations 318-320) discussed in this application (e.g., the telematics service provider may send an alert to the driver without involving the rental or leasing system, etc.).

In response to determining that the current vehicle is not in a dynamic geofence state relative to the current dynamic geofence area, the telematics service provider may determine that it is to perform no further actions in operation 322.

Some embodiments include methods (and components, processors, processing systems, computing devices, etc., configured to implement the methods) of dynamically managing vehicle interactions with geofenced areas influenced by environmental events. A processing system in a computing device (e.g., telematics service provider device, etc.) may receive environmental event data from an external source, augment, prune, enhance, or improve the received environmental event data, predict future environmental events based on the enhanced environmental event data (e.g., by performing interpolation to increase data frequency and using a machine learning algorithm to predict future environmental events, etc.), and generate one or more dynamic geofence areas based on the enhanced and predicted environmental event data. In some embodiments, the processing system may intelligently and/or efficiently identify and discard irrelevant environmental event data, assign a validity period and an environmental event type to each of the generated dynamic geofence areas, and/or perform other similar operations.

In some embodiments, the processing system may be further configured to collect vehicle information (e.g., location, velocity, impact, ignition state, door lock state, etc.) from an onboard unit of a vehicle, obtain renter information (e.g., identity and contact information of the occupants of the vehicle, etc.) from a rental or leasing system, obtain vehicle rental information (e.g., rental status, contract terms, vehicle attributes, etc.) from the rental or leasing system, and store the collected vehicle information, the obtained renter information, and the obtained vehicle rental information in memory.

In some embodiments, the processing system may determine, for each vehicle in relation to each dynamic geofence area, whether the vehicle is in a dynamic geofence state relative to the dynamic geofence area and/or whether the vehicle is in a certain dynamic geofence state. The processing system may send one or more vehicle actions (e.g., display an alert, emit an audio warning, update route guidance, disable autonomous driving, steer the vehicle to a safe location, etc.) to the onboard unit of one or more vehicles based on whether or not the vehicle is in a dynamic geofence state (or a specific state). For example, the processing system may determine whether a vehicle entered, or is approaching, a dynamic geofence area designated as hazardous due to temporary conditions (e.g., construction, severe weather, high traffic congestion). In response to detecting the vehicle's entry into the hazardous area, the processing system may automatically adjust the vehicle's operational parameters, for instance, by reducing its speed, suggesting an alternative route to avoid the area, or taking control to steer the vehicle towards a predefined safe location.

In some embodiments, the processing system may periodically update the dynamic geofence parameters to reflect real-time changes in the environment. Examples of dynamic geofence parameters include, but are not limited to, geographic boundaries, severity levels, time-based restrictions that activate or deactivate the geofence during specific hours or days, behavioural conditions that trigger geofence actions based on vehicle speed, direction, or other operational metrics, and various other parameters that allow for seamless communication with vehicle telematics systems, the automatic transmission of alerts, rerouting instructions, safety precautions, etc.

In some embodiments, the processing system may send one or more rental or leasing system actions (e.g., send an alert to a manager or the driver, prompt inspection of the vehicle upon its return, update the rental or leasing system with an additional charge due to rental contract violation, etc.) to the rental or leasing system in response to the processing system determining that a vehicle is in a dynamic geofence state.

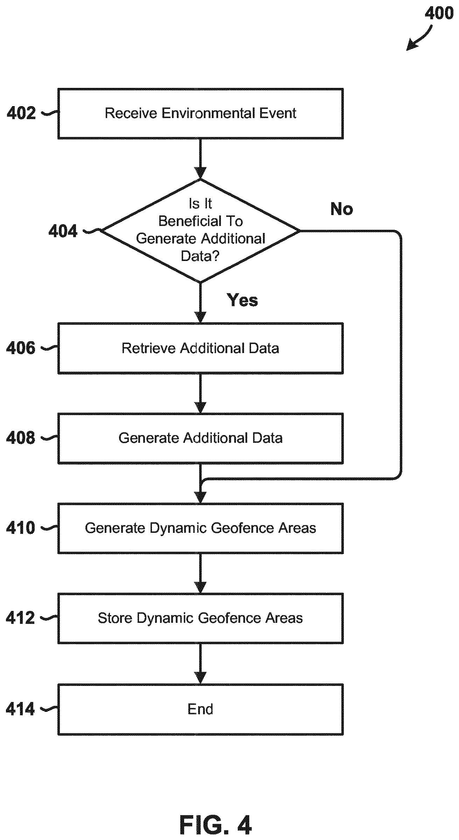

FIG. 4 is a process flow diagram illustrating a method 400 of generating dynamic geofence areas in accordance with some embodiments. All or portions of method 300 may be performed by a processor or processing system (e.g., as part of operations 302-306 with reference to FIG. 3) included in a computing system, which may be included in or associated with a vehicle, a rental or leasing system, and/or a telematics service provider.

In block 402, the processing system may receive one or more environmental events from an external source (e.g., as described in operation 302). In block 404, the processing system may determine whether it is beneficial to generate additional data. In some embodiments, the processing system may perform the operations discussed above with reference to operation 304, etc. For example, the processing system may analyze the granularity and completeness of the received environmental data to identify gaps or areas lacking detail. If the data related to an environmental event, such as a forecasted storm or flood, provides only broad or hourly updates, the system might find it advantageous to interpolate or enhance this data to achieve a finer temporal resolution (e.g., at 15-minute intervals). This additional granularity may allow for more precise and timely adjustments to the dynamic geofence areas, ensuring they reflect the most current and accurate understanding of the environmental event's progression. Similarly, if the received data covers only current or past events, the processing system may use predictive models or machine learning algorithms to extend the data into future forecasts and facilitate proactive adjustments to the geofence parameters.

In response to determining that it is beneficial to generate additional data (i.e., determination block 404 = "Yes"), in block 406, the processing system may retrieve additional data from another source (e.g., a look-up table, a cache). In block 408, the processing system may generate additional data (e.g., as described in operation 304). In an embodiment, the processing system may perform block 406 and/or block 408.

In response to determining that it is not beneficial to generate additional data (i.e., determination block 404 = "No"), or in response to performing blocks 406-408, in block 410 the processing system may generate one or more dynamic geofence areas (e.g., as described in operation 306). In block 412, the processing system may store the generated dynamic geofence areas. The process may exit, end, terminate, or finish in block 414.

Some embodiments may include methods (and components, processors, processing systems, computing devices, etc., configured to implement the methods) of generating or updating dynamic geofence areas based on environmental events. A processing system in a computing device may receive one or more environmental events from at least one external source and determine whether it is beneficial to generate additional data based on the received environmental event information. The processing system may request and retrieve additional data from other sources (e.g., a look-up table, a cache, etc.) in response to determining that it is beneficial to generate additional data. The processing system may also use the received environmental event information to generate additional data (e.g., by using interpolation to enhance data granularity, machine learning algorithms to predict future environmental events, etc.) locally on the device, and use the generated additional data and received environmental event information to generate or update a dynamic geofence area. In some embodiments, the processing system may generate the dynamic geofence areas to include a validity period and an environmental event type.

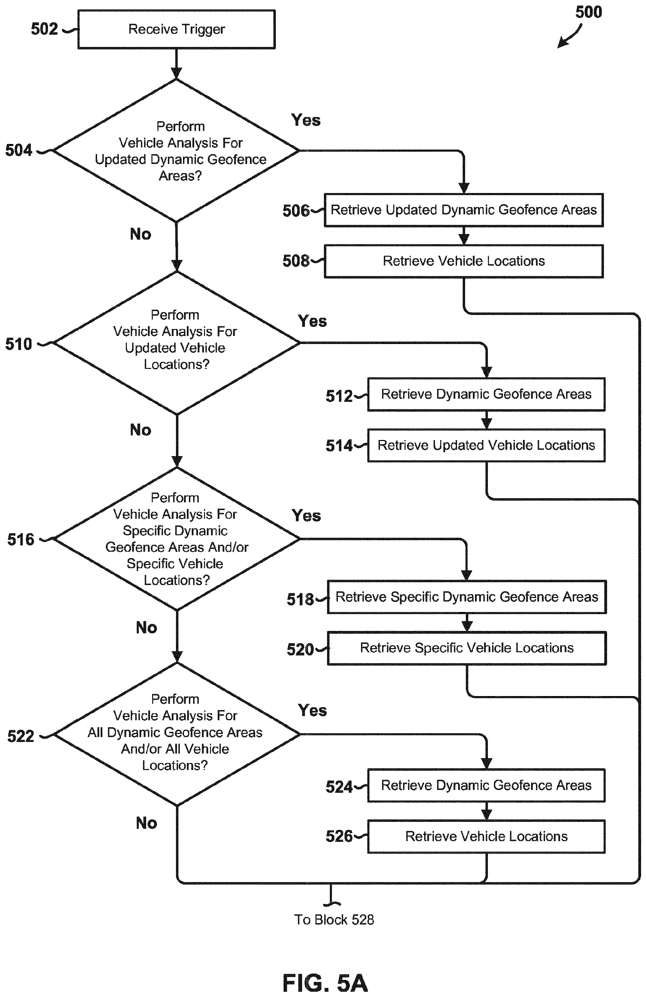

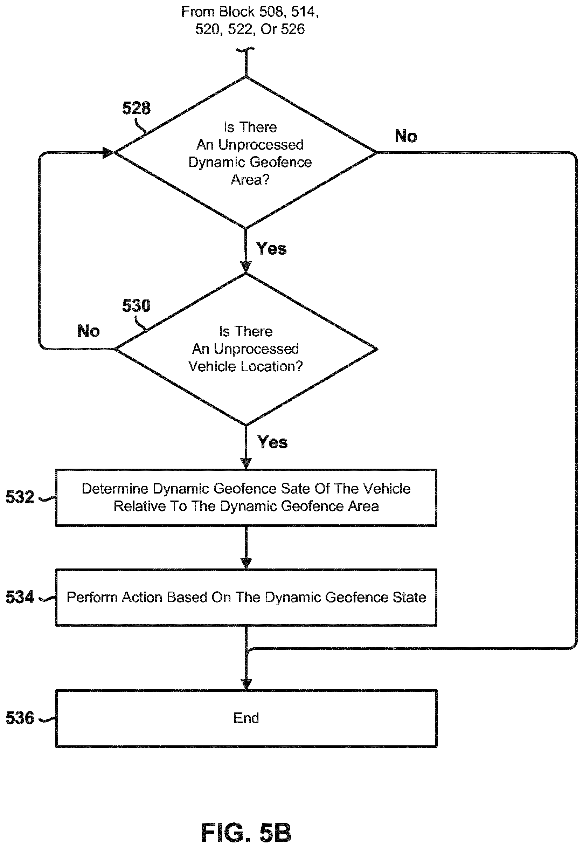

FIGs. 5A and 5B illustrate a method 500 of determining one or more dynamic geofence areas for use in determining the dynamic geofence states of one or more vehicles and subsequently performing the associated actions in accordance with some embodiments. All or portions of method 500 may be performed by a processor or processing system included in a computing system, which may be included in or associated with a vehicle, a rental or leasing system, and/or a telematics service provider. In some embodiments, performing method 500 may be more efficient than determining the dynamic geofence state of all vehicles relative to all dynamic geofence areas.

In block 502, the processing system may receive a trigger caused by a change in the dynamic geofence areas, a change in the vehicle locations, a periodic timer expiring (e.g., every 60 minutes), a scheduled time occurring (e.g., every hour on the hour), etc.

In block 504, the processing system may determine whether it should perform vehicle analysis for one or more updated dynamic geofence areas. In response to determining that it should perform vehicle analysis for one or more updated dynamic geofence areas (i.e., determination block 504 = "Yes"), in block 506 the processing system may retrieve updated dynamic geofence areas (e.g., dynamic geofence areas that were stored as part of block 412 with reference to FIG. 4). In block 508, the processing system may retrieve one or more vehicle locations (e.g., as described in operation 308 with reference to FIG. 3). The processing system may determine which vehicle locations need to be retrieved based upon the updated dynamic geofence areas retrieved in block 506 (e.g., the processing system may only retrieve vehicle locations that were within 300km of a dynamic geofence area with the last 120 minutes).

In response to determining that the processing system should not perform vehicle analysis for one or more updated dynamic geofence areas (i.e., determination block 504 = "No"), in block 510 the processing system may determine whether it should perform vehicle analysis for updated vehicle locations. In response to determining that it should perform vehicle analysis for updated vehicle locations (i.e., determination block 510 = "Yes"), in block 512 the processing system may retrieve dynamic geofence areas (e.g., dynamic geofence areas that were stored as part of block 412 with reference to FIG. 4). In block 514, the processing system may retrieve one or more updated vehicle locations (e.g., as described in operation 308 with reference to FIG. 3). The processing system may determine which dynamic geofence areas need to be retrieved based upon the updated vehicle locations retrieved in block 514 (e.g., the processing system may only retrieve dynamic geofence areas that were within 300km of a vehicle location within the last 120 minutes).

In response to determining that the processing system should not perform vehicle analysis for one or more updated vehicle locations (i.e., determination block 510 = "No"), in block 516 the processing system may determine whether it should perform vehicle analysis for specific dynamic geofence areas and/or specific vehicle locations (e.g., in response to a periodic timer expiring or a scheduled time occurring). In response to determining that it should perform vehicle analysis for specific dynamic geofence areas and/or specific vehicle locations (i.e., determination block 516 = "Yes"), in block 518 the processing system may retrieve specific dynamic geofence areas (e.g., dynamic geofence areas that were stored as part of block 412 with reference to FIG. 4). In block 520, the processing system may retrieve one or more specific vehicle locations (e.g., as described in operation 308 with reference to FIG. 3). The processing system may determine which specific dynamic geofence areas and vehicle locations need to be retrieved based upon trigger parameters. Such a trigger, and its parameters, may result from somebody performing a query in the rental or leasing system.

In response to determining that the processing system should not perform vehicle analysis for specific dynamic geofence areas and/or specific vehicle locations (i.e., determination block 516 = "No"), in block 522 the processing system may determine whether it should perform vehicle analysis for all dynamic geofence areas and/or all vehicle locations (e.g., in response to a periodic timer expiring or a scheduled time occurring). In response to determining that it should perform vehicle analysis for all dynamic geofence areas and/or all vehicle locations (i.e., determination block 522 = "Yes"), in block 524 the processing system may retrieve all dynamic geofence areas (e.g., dynamic geofence areas that were stored as part of block 412 with reference to FIG. 4). In block 526, the processing system may retrieve all vehicle locations (e.g., as described in operation 308 with reference to FIG. 3). Blocks 524-526 are likely to require the most compute resources, and they may be triggered periodically.

The determination of the type of vehicle analysis that the processing system should perform (i.e., blocks 504, 510, 516, 522) may be based upon the type of trigger received (i.e., in block 502), the contents of the trigger received (i.e., in block 502), or a configuration parameter.

In response to determining that the processing system should not perform vehicle analysis for all dynamic geofence areas and/or all vehicle locations (i.e., determination block 522 = "No"), or in response to performing any of the blocks 506-508, 512-514, 518-520, or 524-526, in block 528 the processing system may determine whether there is an unprocessed dynamic geofence area.

In response to determining that there is an unprocessed dynamic geofence area (i.e., determination block 528 = "Yes"), in block 530 the processing system may determine whether there is an unprocessed vehicle location.

In response to determining that there is an unprocessed vehicle location (i.e., determination block 530 = "Yes"), in block 532 the processing system may determine the dynamic geofence state of the unprocessed vehicle relative to the unprocessed dynamic geofence area.

In block 534, the processing system may perform one or more actions based upon the determined dynamic geofence state.

In response to determining that there is not an unprocessed vehicle location (i.e., determination block 530 = "No"), in block 528 the processing system may determine whether there is an unprocessed dynamic geofence area.

In response to determining that there are not an unprocessed dynamic geofence area (i.e., determination block 528 = "No"), then the process may exit, end, terminate, or finish in block 536.

Some embodiments may include methods (and components, processors, processing systems, computing devices, etc., configured to implement the methods) of analyzing dynamic geofence states of vehicles and executing associated actions. A processing system in a computing device may be configured to receive a trigger (e.g., a trigger caused by a change in dynamic geofence areas, a change in vehicle locations, the expiration of a periodic timer, the occurrence of a scheduled time, etc.), determine whether to perform vehicle analysis for a geofence area based on the received trigger, retrieve dynamic geofence area information in response to determining that it should perform the vehicle analysis, retrieve one or more vehicle locations based on proximity to the retrieved dynamic geofence area information, determine whether to perform vehicle analysis for updated vehicle locations in response to determining that vehicle analysis for updated dynamic geofence areas is not required, and retrieve dynamic geofence areas based on the updated vehicle locations in response to determining that vehicle analysis for updated vehicle locations is required.

The processing system may retrieve updated vehicle locations based on the updated dynamic geofence areas, determine whether to perform vehicle analysis for specific dynamic geofence areas and/or specific vehicle locations based on the information included in the received trigger, retrieve specific dynamic geofence areas and specific vehicle locations, determine whether to perform vehicle analysis for all dynamic geofence areas and all vehicle locations in response to determining that vehicle analysis for specific dynamic geofence areas and/or specific vehicle locations is not required, retrieve all dynamic geofence areas and all vehicle locations in response to determining that vehicle analysis for all dynamic geofence areas and all vehicle locations is required.

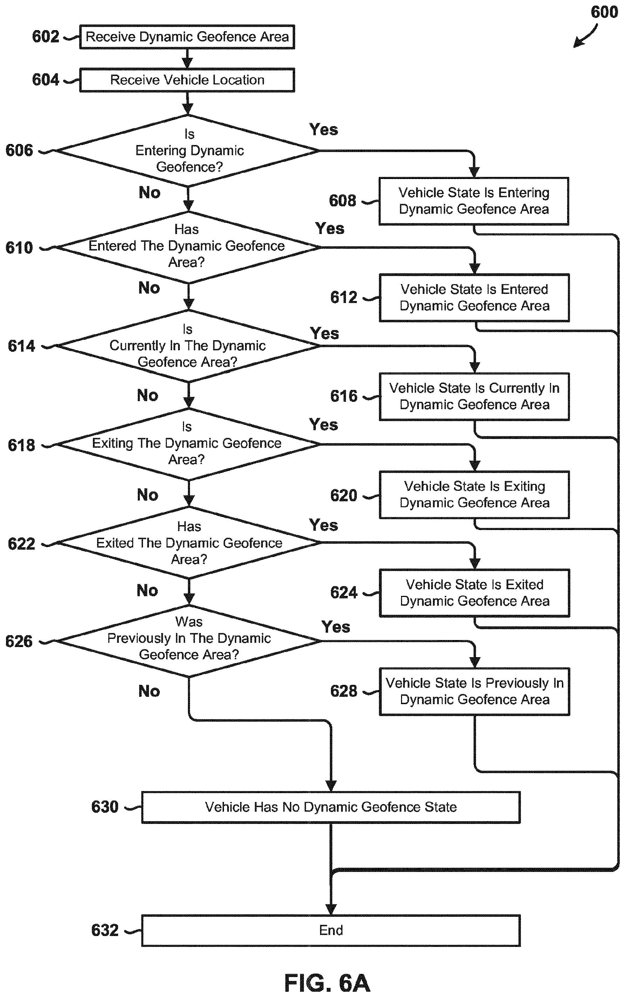

FIGs. 6A-6B are process flow diagrams illustrating methods 600, 650 of determining the dynamic geofence state of a vehicle location relative to a dynamic geofence area (e.g., as part of block 532 with reference to FIG. 5B) in accordance with some embodiments. All or portions of methods 600 and 650 may be performed by a processor or processing system included in a computing system, which may be included in or associated with a vehicle, a rental or leasing system, and/or a telematics service provider.

Specifically, FIG. 6A is a process flow diagram illustrating a method 600 of determining the dynamic geofence state of a vehicle location relative to a dynamic geofence area when the dynamic geofence states are embedded within the telematics service provider.

In block 602, the processing system may receive a dynamic geofence area. In block 604, the processing system may receive a vehicle location (e.g., as a result of block 532 with reference to FIG. 5B).

In blocks 606, 610, 614, 618, 622, and 626, the processing system determines the relationship between the vehicle location and the dynamic geofence area. In the various embodiments, the processing system may make these determinations using any combination of logic operators (e.g., and, or, not) and information received from the on-board unit and/or the rental or leasing system (e.g., operations 308-310 with reference to FIG. 3). In blocks 608, 612, 616, 620, 624, 628 and 630, the processing system may determine the dynamic geofence state of the vehicle.

In block 606, the processing system may determine whether the vehicle is entering the dynamic geofence area. In an embodiment, a vehicle may be determined to be entering a dynamic geofence area if the vehicle location is currently outside the dynamic geofence area, and the vehicle location is within range (e.g., 10km) of a dynamic geofence associated with the dynamic geofence area, and the vehicle is travelling towards the dynamic geofence associated with the dynamic geofence area (e.g., based upon the vehicle velocity received in operation 308 with reference to FIG. 3). In response to determining that the vehicle is entering the dynamic geofence area (i.e., determination block 606 = "Yes"), in block 608 the processing system may set the dynamic geofence state of the vehicle to be that it is entering the dynamic geofence area.

In response to determining that the vehicle is not entering the dynamic geofence area (i.e., determination block 606 = "No"), in block 610 the processing system may determine whether the vehicle has entered the dynamic geofence area. In an embodiment, a vehicle may have entered a dynamic geofence area if the vehicle location is currently inside the dynamic geofence area, and the vehicle location is within range (e.g., 1km) of a dynamic geofence associated with the dynamic geofence area, and the vehicle location was outside the dynamic geofence area recently (e.g., in the last 15 minutes). In response to determining that the vehicle has entered the dynamic geofence area (i.e., determination block 610 = "Yes"), in block 612 the processing system may set the dynamic geofence state of the vehicle to be that it has entered the dynamic geofence area.

In response to determining that the vehicle has not entered the dynamic geofence area (i.e., determination block 610 = "No"), in block 614 the processing system may determine whether the vehicle is currently in the dynamic geofence area. In an embodiment, a vehicle may be currently in a dynamic geofence area if the vehicle location is currently inside the dynamic geofence area. In response to determining that the vehicle is currently in the dynamic geofence area (i.e., determination block 614 = "Yes"), in block 616 the processing system may set the dynamic geofence state of the vehicle to be that it is currently in the dynamic geofence area.

In response to determining that the vehicle is not currently in the dynamic geofence area (i.e., determination block 614 = "No"), in block 618 the processing system may determine whether the vehicle is exiting the dynamic geofence area. In an embodiment, a vehicle may be exiting a dynamic geofence area if the vehicle location is currently inside the dynamic geofence area, and the vehicle location is within range (e.g., 10km) of a dynamic geofence associated with the dynamic geofence area, and the vehicle is travelling towards the dynamic geofence (e.g., based upon the vehicle velocity received in operation 308 with reference to FIG. 3). In response to determining that the vehicle is exiting the dynamic geofence area (i.e., determination block 618 = "Yes"), in block 620 the processing system may set the dynamic geofence state of the vehicle to be that it is exiting the dynamic geofence area.

In response to determining that the vehicle is not exiting the dynamic geofence area (i.e., determination block 618 = "No"), in block 622 the processing system may determine whether the vehicle has exited the dynamic geofence area. In an embodiment, a vehicle may have exited a dynamic geofence area if the vehicle location is outside the dynamic geofence area, the vehicle location is within range (e.g., 1km) of a dynamic geofence associated with the dynamic geofence area, and the vehicle location was inside dynamic geofence area recently (e.g., in the last 15 minutes). In response to determining that the vehicle has exited the dynamic geofence area (i.e., determination block 622 = "Yes"), in block 624 the processing system may set the dynamic geofence state of the vehicle to be that it has exited the dynamic geofence area.

In response to determining that the vehicle has not exited the dynamic geofence area (i.e., determination block 622 = "No"), in block 626 the processing system may determine whether the vehicle was previously in the dynamic geofence area. This may require that the processor retrieve the previous locations of the vehicle. In an embodiment, a vehicle may have been previously in the dynamic geofence area if the vehicle location is currently outside the dynamic geofence area and the vehicle location was inside the dynamic geofence area previously (e.g., in the last 30 days).

In an enhanced embodiment, the processing system may determine whether the vehicle rental status is that it is currently being rented (e.g., based upon the information received from the rental or leasing system in operation 310 with reference to FIG. 3), and the processing system may subsequently determine whether the vehicle location was inside the dynamic geofence area during the current rental period (e.g., based upon the information received from the rental or leasing system in operation 310 with reference to FIG. 3). In response to determining that the vehicle was previously in the dynamic geofence area (i.e., determination block 626 = "Yes"), in block 628 the processing system may set the dynamic geofence state of the vehicle to be that it was previously in the dynamic geofence area.

In response to determining that the vehicle was not previously in the dynamic geofence area (i.e., determination block 626 = "No"), in block 630 the processing system may set the dynamic geofence state of the vehicle to be that it has no dynamic geofence state. The process may exit, end, terminate, or finish in block 632.

Some embodiments may include methods (and components, processors, processing systems, computing devices, etc., configured to implement the methods) of determining the dynamic geofence state based on a vehicle's location relative to a dynamic geofence area. A processing system in a computing device may receive a dynamic geofence area, receive or determine a vehicle location, and determine whether the vehicle is entering the dynamic geofence area based on the vehicle's current location, proximity to the dynamic geofence area, and direction of travel. The processing system may repeatedly or continuously analyze the vehicle's dynamic geofence state relative to the dynamic geofence area (e.g., by sequentially setting the state to "entering," "entered," "inside," "exiting," "exited," "was inside," "no state," etc.) based on the vehicle's current, past, and/or historical locations with respect to the dynamic geofence area. For example, a vehicle may be marked as "entering" in response to the processing system determining that the vehicle is moving towards the dynamic geofence area, marked as "inside" if it is inside the geofence area but has not just entered, etc.

In some embodiments, the processing system may determine the rental status of the vehicle, determine whether the vehicle location was inside the dynamic geofence area during the rental period for vehicles currently rented, and update the dynamic geofence state of the vehicle based on the rental status analysis. For example, the processing system may use the vehicle's rental period data to contextualize its presence within a dynamic geofence area. If a vehicle, currently under a rental agreement, enters a dynamic geofence area delineated for a flash flood warning, the processing system might tag the vehicle with a "critical" dynamic geofence state. This classification may trigger immediate and customized actions, such as sending urgent evacuation routes directly to the vehicle's navigation system or alerting rental company representatives to prioritize communication with the renter for safety advisories.

In some embodiments, the processing system may determine whether the vehicle was previously within a dynamic geofence area during its rental period and subsequently exited. The processing system may update that vehicle's state to "exited" and log this event for post-rental analysis, such as assessing the vehicle's exposure to potential damage or reviewing compliance with rental terms that might restrict travel through hazardous zones. In some embodiments, the post-rental analysis may include using historical data to analyse and assist in various management decisions, such as vehicle allocation, rerouting of upcoming rentals, scheduling inspections for potential damage assessments upon the vehicle's return, etc.

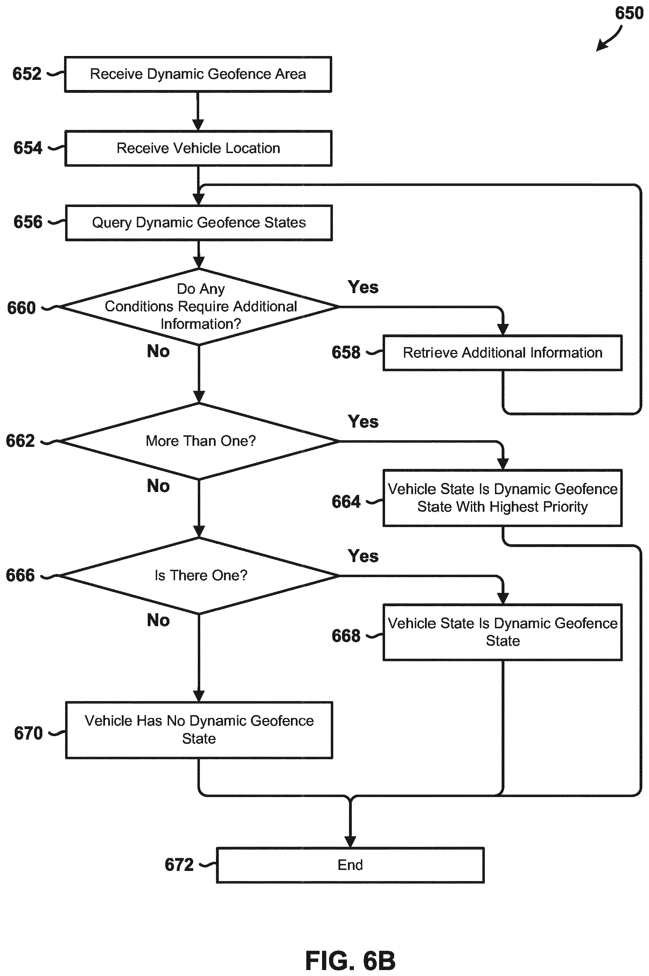

FIGs. 6B is a process flow diagram illustrating a method 650 of determining the dynamic geofence state of a vehicle location relative to a dynamic geofence area when the dynamic geofence states are not embedded within the telematics service provider (e.g., they may be provided and updated by a user at run-time) in accordance with some embodiments.

Some embodiments may include a dedicated repository that stores dynamic geofence states and the conditions associated with the dynamic geofence states. Each state may include a "condition" that is determined based on the spatial relation of a vehicle to a geofenced area. The condition may use a series of logic operators (e.g., "and," "or," "not", etc.) to process data sourced from the vehicle's onboard unit and/or rental or leasing systems. These conditions may be further refined to account for the geofenced area's characteristics, distinguishing between environments such as urban versus rural settings, or categorizing the geofenced area by the nature of its triggering environmental event, be it extreme weather conditions or civil disturbances. To ensure clarity and prevent overlapping or conflicting states, each condition is assigned a specific and unique priority. This structured approach guarantees that a vehicle is associated with a singular, clearly defined dynamic geofence state, facilitating precise and orderly management of vehicle movements relative to geofenced areas.

In an embodiment, the dynamic geofence states may be stored in a repository of dynamic geofence states. Each dynamic geofence state may be associated with one or more conditions that may be used to determine whether a vehicle is in a dynamic geofence state and/or whether the vehicle is in a dynamic geofence area. Further, each condition may be associated with a priority so that each vehicle may have a single dynamic geofence state relative to a dynamic geofence area at any given time.

In block 652, the processing system may receive a dynamic geofence area. In block 654, the processing system may receive a vehicle location (e.g., as a result of block 532 with reference to FIG. 5B).

In block 656, the processing system may query a repository of dynamic geofence states using the dynamic geofence area and the vehicle location. This may result in the processing system receiving one or more conditions, and subsequently evaluating them.

In block 660, the processing system may determine whether any of the conditions require additional information (e.g., velocity). In response to determining that one of the conditions requires additional information (i.e., determination block 660 = "Yes"), in block 658 the processing system may retrieve the required additional information (e.g., it may retrieve the vehicle velocity from the on-board unit, and it may retrieve the vehicle rental status from the rental or leasing system, as part of operations 308-310 with reference to FIG. 3).

In response to determining that none of the conditions requires additional information (i.e., determination block 660 = "No"), in block 662 the processing system may determine whether there is more than one dynamic geofence state for the vehicle location relative to the dynamic geofence area. In response to determining that there is more than one dynamic geofence state for the vehicle location relative to the dynamic geofence area (i.e., determination block 662 = "Yes"), in block 664 the processing system may set the dynamic geofence state of the vehicle to be the dynamic geofence state with the highest priority.

In response to determining that there is not more than one dynamic geofence state for the vehicle location relative to the dynamic geofence area (i.e., determination block 662 = "No"), in block 666 the processing system may determine whether there is one dynamic geofence state for the vehicle location relative to the dynamic geofence area. In response to determining that there is one dynamic geofence state for the vehicle location relative to the dynamic geofence area (i.e., determination block 666 = "Yes"), in block 668 the processing system may set the dynamic geofence state of the vehicle to be the dynamic geofence state.

In response to determining that there is not one dynamic geofence state for the vehicle location relative to the dynamic geofence area (i.e., determination block 666 = "No"), in block 670 the processing system may set the dynamic geofence state of the vehicle to be that it has no dynamic geofence state. The process may exit, end, terminate, or finish in block 672.

Some embodiments may include methods (and components, processors, processing systems, computing devices, etc., configured to implement the methods) of determining the dynamic geofence state of a vehicle relative to a dynamic geofence area. A processing system in a computing device may receive a dynamic geofence area, receive a vehicle location (subsequent to the receiving of the dynamic geofence area), and use the received dynamic geofence area and vehicle location to query a repository of dynamic geofence states (e.g., storing conditions associated with each dynamic geofence state, etc.). In response, the processing system may receive one or more conditions suitable for evaluating the dynamic geofence state of the vehicle. The received conditions may include a combination of logic operators and/or information related to the relationship between the vehicle location and the dynamic geofence area. The processing system may determine whether any of the received conditions require additional information for evaluation, retrieve any such additional information for the conditions from the onboard unit and/or the rental or leasing system, use the received dynamic geofence area, the received vehicle location, and the retrieved additional information to analyze the received conditions, and identify potential dynamic geofence states for the vehicle based on a result of the analysis.

In some embodiments, the processing system may determine whether there are multiple potential dynamic geofence states for the vehicle's location relative to the dynamic geofence area. The processing system may assign the dynamic geofence state with the highest priority to the vehicle in response to identifying more than one potential state. On the other hand, if only a single potential dynamic geofence state is detected, the processing system may set the vehicle's dynamic geofence state to the identified dynamic geofence state. The processing system may set the vehicle's dynamic geofence state as "no state" in response to determining that there are no potential dynamic geofence states.

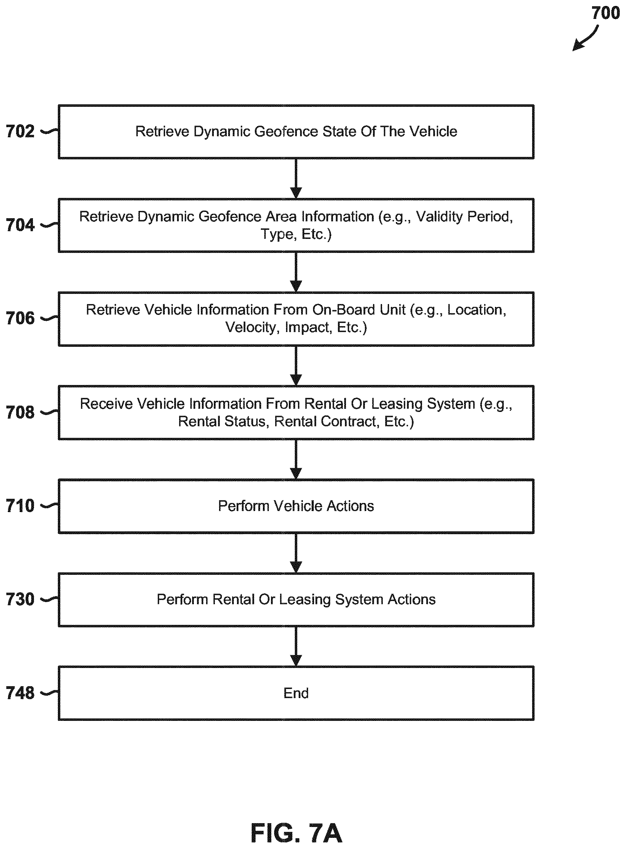

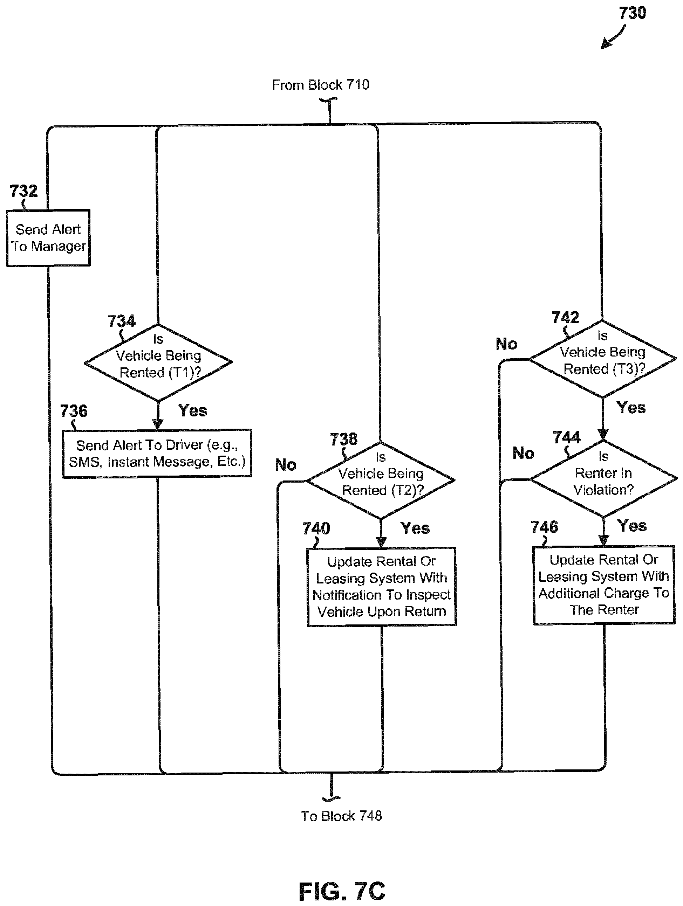

FIGs. 7A-7D are process flow diagrams illustrating various methods 700, 710, 730, and 750 of performing actions in response to determining that a vehicle is in a dynamic geofence state associated with a dynamic geofence area (e.g., as part of block 534 with reference to FIG. 5B) in accordance with some embodiments. All or portions of methods 700, 710, 730, and 750 may be performed by a processor or processing system included in a computing system, which may be included in or associated with a vehicle, a rental or leasing system, and/or a telematics service provider.

Specifically, FIGs. 7A-7C illustrate a method of performing actions in response to determining that a vehicle is in a dynamic geofence state associated with a dynamic geofence area when the actions are embedded within the telematics service provider in accordance with the various embodiments.

With reference to FIGs. 7A-7C, in block 702, the processing system may retrieve the dynamic geofence state of the vehicle. In block 704, the processing system may retrieve dynamic geofence area information (e.g., validity period, type). In block 706, the processing system may retrieve vehicle information from the on-board unit in the vehicle (e.g., location, velocity, impact). In block 708, the processing system may retrieve vehicle information from the rental or leasing system (e.g., rental status, rental contract). It should be understood that, in the various embodiments, the operations in blocks 704-708 may be optional.

In block 710, the processing system may perform one or more vehicle actions. The processing system may determine whether it should perform a vehicle action based on the dynamic geofence state of the vehicle. Examples of vehicle actions include, but are not limited to, visual alerts (e.g., using augmented reality to display visual alerts on the dashboard, mirrors, or the windscreen, etc.), audio alerts, information, or instructions, navigation or route guidance updates (e.g., causing the vehicle to automatically reroute the driver away from hazards or towards safer paths, etc.), disabling autonomous driving features (e.g., mandating manual control in unpredictable environmental conditions, etc.), activating autonomous driving to navigate to a safer location, etc.

In block 712, the processing system may send an alert to the on-board unit of the vehicle (e.g., as described in operation 314 with reference to FIG. 3). In block 714, the vehicle may display an alert to the driver (e.g., on the dashboard, on a mirror, on the windscreen using augmented reality) or emit an audio warning (e.g., using the infotainment system in the vehicle) (e.g., as described in operation 316 with reference to FIG. 3).

In block 716, the processing system may immobilize the vehicle, or otherwise render the vehicle partially or fully inoperable (e.g., in response to environmental events where the vehicle should stay in its current location).

In block 718, the processing system may determine whether the vehicle is currently being rented. In response to determining that the vehicle is currently being rented (i.e., determination block 718 = "Yes"), in block 720 the processing system may update the route guidance system in the vehicle (e.g., by sending a message to the on-board unit of the vehicle).

In block 722, the processing system may determine whether the vehicle is currently being driven autonomously. In response to determining that the vehicle is currently being driven autonomously (i.e., determination block 722 = "Yes"), in block 724 the processing system may disable the autonomous driving (e.g., by sending a message to the on-board unit of the vehicle).

In block 726, the processing system may determine whether the vehicle is capable of being driven autonomously. In response to determining that the vehicle is capable of being driven autonomously (i.e., determination block 726 = "Yes"), in block 728 the processing system may instruct the vehicle to drive to a specific location (e.g., by sending a message to the on-board unit of the vehicle). The specific location may be a location that is deemed to be safe relative to the dynamic geofence area type (e.g., a high location if the environmental event is flooding, an underground car park if the environmental event is a hurricane).

In the various embodiments, blocks 712-714, 716, 718-720, 722-724, and 726-728, may occur sequentially or in parallel. Further, block 710 may contain additional blocks for performing additional vehicle actions.

In block 730, the processing system may perform one or more rental or leasing system actions. The processing system may determine whether it should perform a rental or leasing system action based upon the dynamic geofence state of the vehicle.

In block 732, the processing system may send an alert to a manager in the rental or leasing company. This may cause the manager to perform some further actions.

In block 734, the processing system may determine whether the vehicle is currently being rented. In response to determining that the vehicle is currently being rented (i.e., determination block 734 = "Yes"), in block 736 the processing system may send an alert to the driver (e.g., SMS, instant message, email).

In block 738, the processing system may determine whether the vehicle is currently being rented. In response to determining that the vehicle is currently being rented (i.e., determination block 738 = "Yes"), in block 740 the processing system may update the rental or leasing system with a notification for a manager to inspect the vehicle upon its return to the rental or leasing company. In an embodiment, the notification may contain the type of the dynamic geofence area and specific inspection instructions (e.g., if the environmental event associated with the dynamic geofence area was hailstones, then the specific instructions may be to inspect the roof of the vehicle for paint damage using a light source from multiple angles).

In block 742, the processing system may determine whether the vehicle is currently being rented. In response to determining that the vehicle is currently being rented (i.e., determination block 742 = "Yes"), in block 744 the processing system may determine whether the renter is violating a term of the rental contract. In response to determining that the renter is violating a term of the rental contract (i.e., determination block 744 = "Yes"), in block 746 the processing system may update the rental or leasing system with one or more additional charges to the renter (e.g., the renter may be charged a surcharge, and have to pay for any damage to the vehicle, if the renter drove the vehicle into an area of civil unrest after receiving an alert advising the renter not to drive there).

In the various embodiments, blocks 732, 734-736, 738-740, and 742-746, may occur sequentially or in parallel. Further, block 730 may contain additional blocks for performing additional vehicle actions.

The process may exit, end, terminate, or finish in block 748.

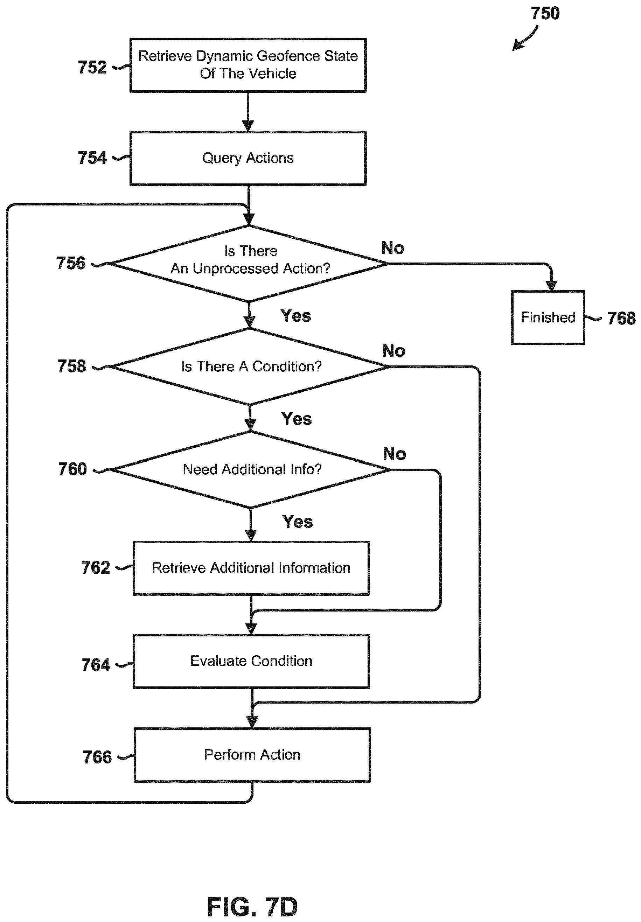

FIG. 7D is a process flow diagram illustrating a method 750 of performing actions in response to determining that a vehicle is in a dynamic geofence state associated with a dynamic geofence area when the actions are not embedded within the telematics service provider (e.g., they may be provided and updated by a user at run-time).

In block 752, the processing system may retrieve the dynamic geofence state of the vehicle. In block 754, the processing system may query a repository of actions using the dynamic geofence state. This may result in the processing system receiving one or more actions.

In block 756, the processing system may determine whether there is an unprocessed action. In response to determining that there is an unprocessed action (i.e., determination block 756 = "Yes"), in block 758 the processing system may select an unprocessed action and determine whether there is a condition that needs to be evaluated as part of the action.

In response to determining that there is a condition that needs to be evaluated as part of the action (i.e., determination block 758 = "Yes"), in block 760 the processing system may determine whether the condition requires additional information (e.g., the rental status of the vehicle). In response to determining that the condition requires additional information (i.e., determination block 760 = "Yes"), in block 762 the processing system may retrieve the required additional information (e.g., it may retrieve the vehicle velocity from the on-board unit, and it may retrieve the vehicle rental status from the rental or leasing system, as part of operations 308-310 with reference to FIG. 3).

In response to performing block 762, or in response to determining that the condition does not require additional information (i.e., determination block 760 = "No"), in block 764, the processing system may evaluate the condition.

In response to performing block 764, or in response to determining that there is not a condition that needs to be evaluated as part of the action (i.e., determination block 758 = "No"), in block 766, the processing system may perform the action (e.g., a vehicle action, a rental or leasing system action). In an embodiment, a single action may contain several sub-actions, and the processing system may perform all of these sub-actions. In an embodiment, the processing system may perform two or more actions for a single vehicle in a single dynamic geofence state.

In response to determining that there is not an unprocessed action (i.e., determination block 756 = "No"), then the process may exit, end, terminate, or finish in block 768.

Some embodiments may include methods (and components, processors, processing systems, computing devices, etc., configured to implement the methods) of performing responsive actions in accordance with some embodiments. In some embodiments, a processing system in a computing device may retrieve the dynamic geofence state of the vehicle, retrieve information related to the dynamic geofence area (e.g., its validity period, type, etc.), retrieve vehicle information from the onboard unit (e.g., location, velocity, impact, etc.), retrieve vehicle information from the rental or leasing system (e.g., rental status, contract details, etc.), and determine whether specific vehicle actions should be performed based on the dynamic geofence state.

In various embodiments, the processing system may send an alert to the onboard unit of the vehicle, display an alert to the driver or emit an audio warning through the vehicle's systems, immobilize the vehicle or render it partially inoperable (e.g., in response to environmental events necessitating such action, etc.), update the route guidance system of the vehicle if it is currently rented, disable autonomous driving if the vehicle is currently being driven autonomously, or instruct the vehicle to drive to a predetermined safe location if the vehicle is capable of autonomous driving.

In some embodiments, the processing system may determine, based on the dynamic geofence state, whether specific rental or leasing system actions should be performed. In some embodiments, the processing system may send an alert to a manager at the rental or leasing company. In some embodiments, the processing system may send an alert to the driver if the vehicle is currently rented. In some embodiments, the processing system may update the rental or leasing system with a notification for vehicle inspection upon its return, including specific inspection instructions based on the dynamic geofence area type. In some embodiments, the processing system may update the rental or leasing system with additional charges to the renter if a contract term is violated. In some embodiments, the processing system may query a repository of actions using the dynamic geofence state and determine whether there is an unprocessed action.

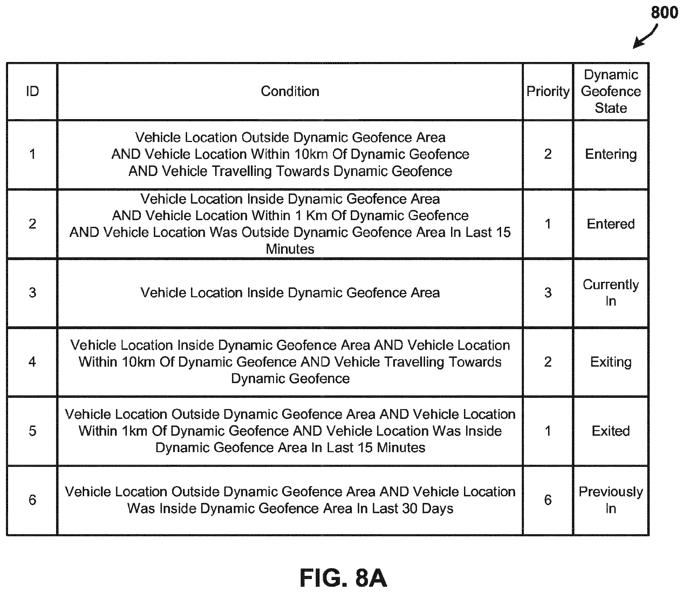

FIGs. 8A-8B are tables that illustrate dynamic geofence states and their associated actions in accordance with some embodiments.

Specifically, FIG. 8A illustrates a table 800 that associates vehicle locations and dynamic geofence areas with priorities and dynamic geofence states. Table 800 may be used as a repository of dynamic geofence states (e.g., as used in block 656 with reference to FIG. 6B).

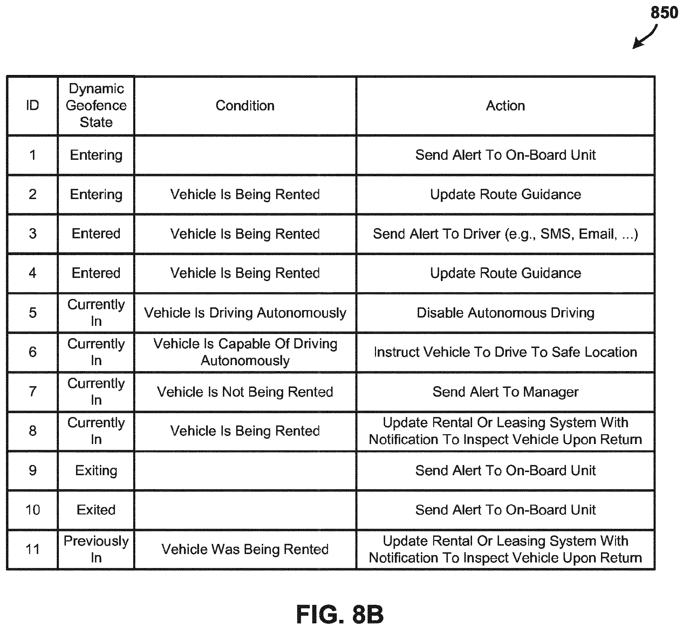

FIG. 8B illustrates a table 850 that associates dynamic geofence states with conditions and actions. Table 850 may be used as a repository of actions (e.g., as used in block 754 with reference to FIG. 7D).

In an embodiment, tables 800 and 850 could be combined to form a single table that may be used to associate vehicle locations and dynamic geofence areas with actions.

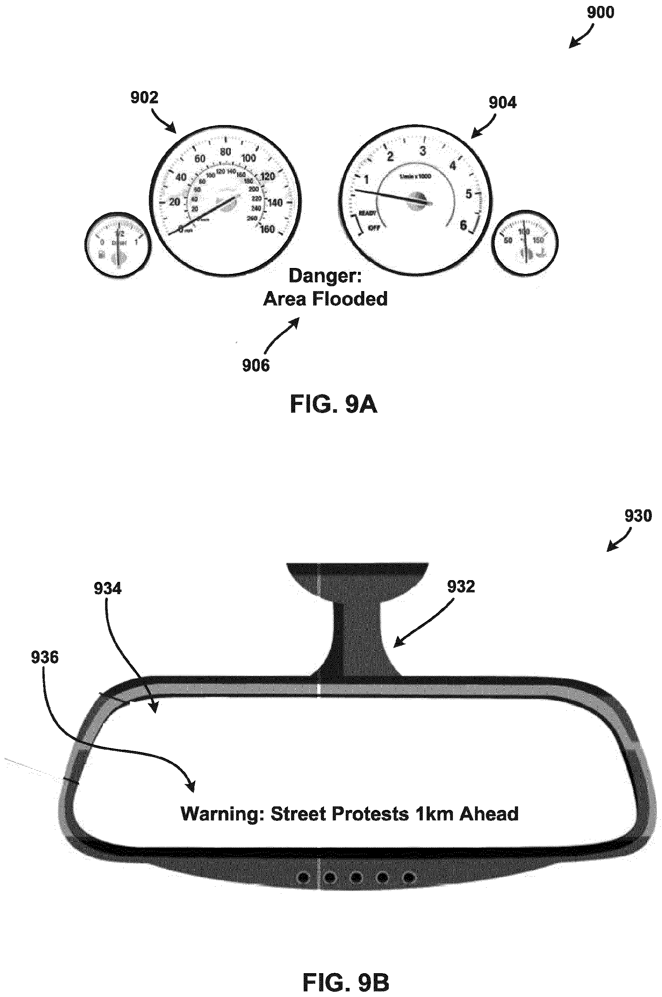

FIGs. 9A-9C are component diagrams that illustrate various vehicle actions that may be performed when a vehicle changes its dynamic geofence state in accordance with some embodiments (e.g., as part of block 710 with reference to FIG. 7A, as part of rows 1, 9, and 10 with reference to FIG. 8B).

Specifically, FIG. 9A is a component diagram that illustrates the dashboard 900 of a rental vehicle. The dashboard contains displays for speed 902 and engine revolutions 904. The dashboard contains a display area, and the display area is capable of displaying an alert 906 to the driver when the vehicle changes its dynamic geofence state. The alert 906 contains information relating to the type of dynamic geofence area (i.e., a flooded dynamic geofence area).

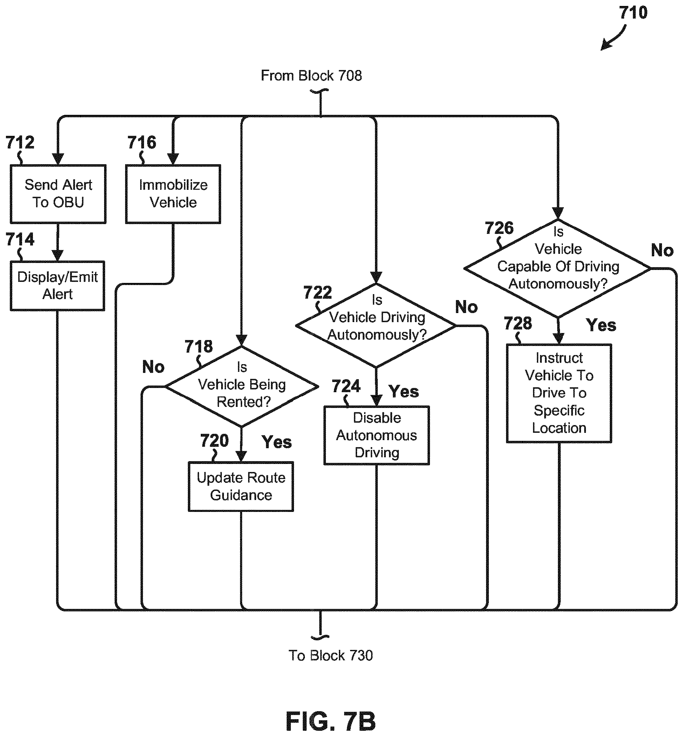

In an enhanced embodiment, the telematics service provider may determine the driver's preferred language (e.g., by querying the rental or leasing system), and subsequently send an alert in the driver's preferred language to the on-board unit of the vehicle (e.g., as part of block 712 with reference to FIG. 7B).

FIG. 9B is a component diagram that illustrates the center mirror 930 of a rental vehicle. The center mirror consists of a pedestal 932 and an encased mirror 934. The encased mirror 934 is capable of displaying an alert 936 to the driver when the vehicle changes its dynamic geofence state. The alert 936 contains information relating to the type of dynamic geofence area (i.e., a dynamic geofence area containing street protests) and the distance from the vehicle to the dynamic geofence area (i.e., 1km).

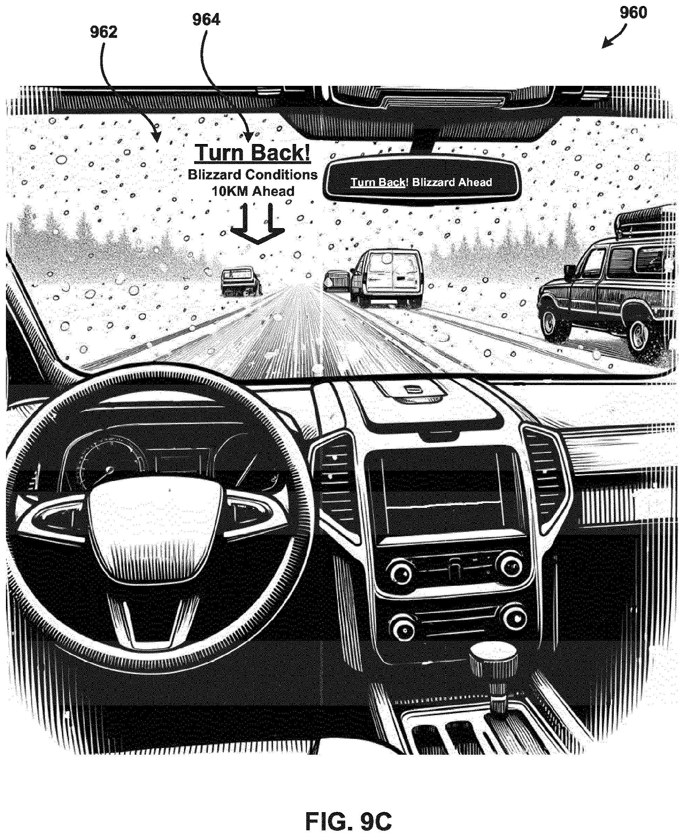

FIG. 9C is a component diagram that illustrates a front windscreen 960 that is capable of acting as an augmented reality display in a vehicle. The front windscreen consists of glass 962, and it is capable of displaying an augmented reality alert 964 to the driver when the vehicle changes its dynamic geofence state. The alert 964 contains information relating to the type of dynamic geofence area (i.e., a dynamic geofence area containing a snowstorm) and the distance and direction from the vehicle to the dynamic geofence area (i.e., 10km straight ahead).

Some embodiments may include methods (and components, processors, processing systems, computing devices, etc., configured to implement the methods) of generating and using dynamic geofence areas in a fleet management system, which may include receiving information relating to an environmental event, generating a dynamic geofence area, receiving a location from an on-board telematics unit of a vehicle, determining the dynamic geofence state of the vehicle using the received location, and performing an action in response to determining that the vehicle may be in a dynamic geofence state.

In some embodiments, generating a dynamic geofence area may include generating a dynamic geofence area that contains a validity period. In some embodiments, generating a dynamic geofence area may include generating a dynamic geofence area that contains a type. In some embodiments, generating a dynamic geofence area that contains a type may include generating a dynamic geofence area that contains a weather type. In some embodiments, generating a dynamic geofence area may include generating additional data using the received information relating to an environmental event, and generating a dynamic geofence area using the generated additional data. In some embodiments, determining the dynamic geofence state of the vehicle using the received location may include determining the dynamic geofence state of the vehicle in response to receiving a notification indicating that a new dynamic geofence area has been generated.

In some embodiments, determining the dynamic geofence state of the vehicle using the received location may include determining the velocity of the vehicle, and determining the dynamic geofence state of the vehicle using the received location and the determined velocity. In some embodiments, determining the dynamic geofence state of the vehicle using the received location may include retrieving previous locations of the vehicle, and determining the dynamic geofence state of the vehicle using the received location and the retrieved locations. In some embodiments, determining the dynamic geofence state of the vehicle using the received location and the retrieved locations may include determining that the dynamic geofence state of the vehicle may be that the vehicle was in a dynamic geofence area. In some embodiments, determining the dynamic geofence state of the vehicle using the received location may include determining that the dynamic geofence state of the vehicle may be that the vehicle enters a dynamic geofence area. In some embodiments, determining the dynamic geofence state of the vehicle using the received location may include retrieving a user-defined condition, evaluating the user-defined condition, and determining the dynamic geofence state of the vehicle using the evaluated user-defined condition.

In some embodiments, performing an action in response to determining that the vehicle may be in a dynamic geofence state may include determining the rental status of the vehicle, performing an action in response to determining that the vehicle may be in a dynamic geofence state, and the determined rental status of the vehicle. In some embodiments, performing an action in response to determining that the vehicle may be in a dynamic geofence state may include sending an alert to the on-board telematics unit of the vehicle. In some embodiments, sending an alert to the on-board telematics unit of the vehicle may include sending an alert to the on-board telematics unit of the vehicle that causes the vehicle to display an alert on the dashboard. In some embodiments, sending an alert to the on-board telematics unit of the vehicle may include sending an alert to the on-board telematics unit of the vehicle that causes the vehicle to display an augmented reality alert on the windscreen. In some embodiments, sending an alert to the on-board telematics unit of the vehicle may include sending an alert to the on-board telematics unit of the vehicle that causes the vehicle to update its route guidance.

In some embodiments, sending an alert to the on-board telematics unit of the vehicle may include determining that the vehicle may be driving autonomously, and sending an alert to the on-board telematics unit of the vehicle that causes the vehicle to disable autonomous driving. In some embodiments, sending an alert to the on-board telematics unit of the vehicle may include determining that the vehicle may be capable of driving autonomously, determining a specific location, and sending an alert to the on-board telematics unit of the vehicle that causes the vehicle to drive autonomously to the specific location. In some embodiments, performing an action in response to determining that the vehicle may be in a dynamic geofence state may include updating a record associated with the vehicle in the fleet management system.

In some embodiments, updating a record associated with the vehicle in the fleet management system may include updating the record with the dynamic geofence area type, and updating the record with a notification to inspect the vehicle when it may be returned to the rental location. Further embodiments may include a computing device having a processor configured with processor-executable instructions to perform various operations corresponding to the methods discussed above. Further embodiments may include a computing device having various means for performing functions corresponding to the method operations discussed above. Further embodiments may include a non-transitory processor-readable storage medium having stored thereon processor-executable instructions configured to cause a processor to perform various operations corresponding to the method operations discussed above.

Some embodiments may include methods of determining the dynamic geofence state of a vehicle relative to a dynamic geofence area, which may include receiving a dynamic geofence area, receiving a vehicle location, subsequent to the receiving of the dynamic geofence area, querying a repository of dynamic geofence states using the received dynamic geofence area and vehicle location, in which the repository includes conditions associated with each dynamic geofence state, receiving one or more conditions for evaluating the dynamic geofence state of the vehicle, each condition including logic operators and identifying a relationship between the vehicle location and the dynamic geofence area, determining whether any of the received conditions require additional information for evaluation, retrieving the additional information from the onboard unit or the rental or leasing system in response to determining that the received conditions require additional information for evaluation, identifying potential dynamic geofence states for the vehicle based on a result of analyzing the received conditions based on the vehicle location, dynamic geofence area.

Some embodiments may include methods of generating dynamic geofence areas based on environmental events, which may include receiving one or more environmental events from at least one external source, determining whether it is beneficial to generate additional data based on the received environmental events, generating the additional data or retrieving the additional data from another source in response to determining that it is beneficial to generate the additional data, generating one or more dynamic geofence areas based on the received environmental events and the additional data, in which each dynamic geofence area is an information structure that includes a validity period and an environmental event type, and storing the generated dynamic geofence areas in memory of the computing device. In some embodiments, the methods may include receiving a trigger, in which the trigger is caused by at least one of change in dynamic geofence areas, a change in vehicle locations, the expiration of a periodic timer, or the occurrence of a scheduled time, determining whether to perform vehicle analysis for one or more dynamic geofence areas based on the received trigger and retrieving updated dynamic geofence areas from the memory in response to determining to vehicle analysis should be performed for the retrieved dynamic geofence areas.

Some embodiments may include methods of dynamically managing vehicle interactions within geofenced areas based on environmental events, which may include receiving environmental event data from at least one external source, enhancing the granularity of the received environmental event data and predicting future environmental events based on the received environmental event data (in which enhancing the granularity includes performing interpolation to increase data frequency and using a machine learning algorithm to predict future environmental events), generating one or more dynamic geofence areas based on the enhanced environmental event data and future environmental events (in which each dynamic geofence area may be assigned a validity period and an environmental event type), collecting vehicle information from an onboard unit of a vehicle (in which the vehicle information may include at least one of more of location, velocity, impact, ignition state, and door lock state data), obtaining renter and vehicle rental information from a rental or leasing system (in which the renter information may include identity and contact information for the occupants of the vehicle, and the vehicle rental information may include rental status, contract terms, and vehicle attributes), storing the collected vehicle information and the obtained renter and vehicle rental information in memory, determining whether the vehicle is in a dynamic geofence state, and in response to determining that a vehicle is in a dynamic geofence state sending one or more vehicle actions to the onboard unit of the vehicle. The vehicle actions may include one or more of displaying an alert, emitting an audio warning, updating route guidance, disabling autonomous driving, and instructing autonomous driving to a safe location. In some embodiments, the methods may include sending rental or leasing system actions to the rental or leasing system (in which the rental or leasing system actions include one or more of sending an alert to a manager or the driver), prompting inspection of the vehicle upon its return, and updating the rental or leasing system with an additional charge due to rental contract violation.

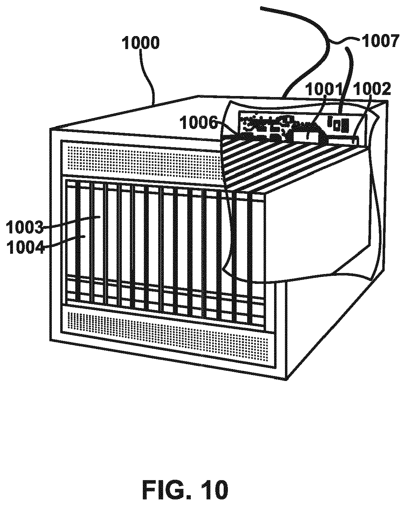

The various embodiments may be implemented on any of a variety of commercially available server devices, such as the server 1000 illustrated in FIG. 10. Such a server 1000 typically includes a processor 1001 coupled to volatile memory 1002 and a large capacity nonvolatile memory, such as a disk drive 1003. The server 1000 may also include a floppy disc drive, compact disc (CD) or DVD disc drive 1006 coupled to the processor 1001. The server 1000 may also include network access ports 1004 coupled to the processor 1001 for establishing data connections with a network 1005, such as a local area network coupled to other operator network computers and servers.

The processor 1001 may be any programmable microprocessor, microcomputer or multiple processor chip or chips that may be configured by software instructions (applications) to perform a variety of functions, including the functions of the various embodiments described below. Multiple processors 1001 may be provided, such as one processor dedicated to wireless communication functions and one processor dedicated to running other applications. Typically, software applications may be stored in the internal memory 1002, 1003 before they are accessed and loaded into the processor 1001. The processor 1001 may include internal memory sufficient to store the application software instructions.

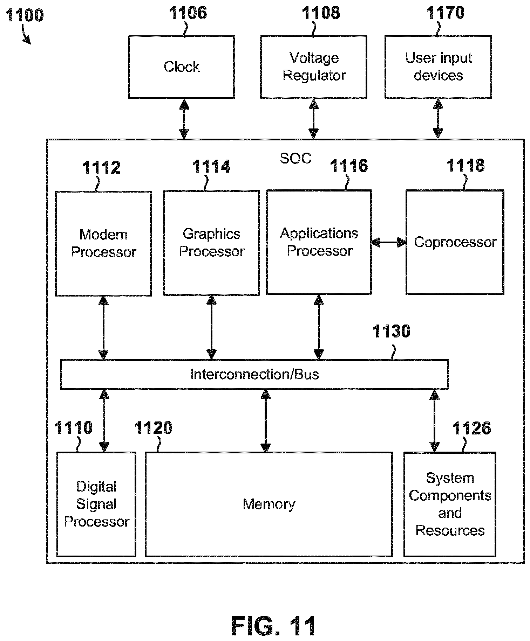

Various embodiments may also be implemented on a number of single-processor and multiprocessor computer systems, including a system-on-chip (SOC) or system in a package (SIP). FIG. 11 illustrates an example computing system or SOC 1100 architecture that may be used in devices implementing the various embodiments. In some embodiments, the SOC 1100 may be included in a vehicle as part of an advanced driver-assistance system (ADAS), engine control unit (ECU), infotainment system, and other similar components or devices that include a memory and programmable processor for providing the functionality described herein.

With reference to FIG. 11, the illustrated example SOC 1100 includes a clock 1106, a voltage regulator 1108, and user input devices 1170 (e.g., a touch-sensitive display, a touch pad, a mouse, etc.). The SOC 1100 may include a digital signal processor (DSP) 1110, a modem processor 1112, a graphics processor 1114, an application processor 1116, one or more coprocessors 1118 (e.g., vector co-processor, CPUCP, etc.) connected to one or more of the processors, memory 1120, system components and resources 1126, an interconnection bus 1130, and various additional processors, such as an applications processor, packet processor, etc.

Each of the processors 1110-1118 may include multiple cores capable of executing tasks independently or as part of a processor cluster, either synchronously or heterogeneously. The processors 1110-1118 may run different operating systems, such as FreeBSD, LINUX, OS X, or WINDOWS 11, serving as the mobile computing device's central processing unit (CPU). The processors 1110-1118 may be organized into CPU clusters (or networks of nodes working together on computational tasks) in which each node operates its unique system and has its own CPU, memory, and storage.

The SOC 1100 may include various system components, resources, and custom circuitry for managing sensor data, analog-to-digital conversions, wireless data transmissions, and for performing other specialized operations, such as decoding data packets and processing encoded audio and video signals for rendering in a web browser. For example, the system components and resources of the SOC 1100 may include power amplifiers, voltage regulators, oscillators, phase-locked loops, peripheral bridges, data controllers, memory controllers, system controllers, Access ports, timers, and other similar components used to support the processors and software clients running on a computing device. The system components and resources may also include circuitry to interface with peripheral devices, such as cameras, electronic displays, wireless communication devices, external memory chips, etc.

The SOC 1100 may further include an input/output module (not illustrated) for communicating with resources external to the SOC, such as the clock, the voltage regulator, user input devices (e.g., a touch-sensitive display, a touch pad, a mouse, etc.), wireless transceiver (e.g., cellular wireless transceiver, Bluetooth transceiver, etc.), a user facing camera, etc. Resources external to the SOC (e.g., clock 1106, voltage regulator 1108, etc.) may be shared by two or more of the internal SOC processors/cores.

In addition to the example SOC 1100 discussed above, various embodiments may be implemented in various computing systems, including a single processor, multiple processors, multicore processors, or any combination thereof.

The processors, processing systems, or processing units discussed in this application may be any programmable microprocessor, microcomputer, or multiple processor chip or chips that can be configured by software instructions (applications) to perform a variety of functions, including the functions of various embodiments described. In some computing devices, multiple processors may be provided, such as one processor within the first circuitry dedicated to wireless communication functions and one processor within the second circuitry dedicated to running other applications. Software applications may be stored in the memory before they are accessed and loaded into the processor. The processors may include internal memory sufficient to store the application software instructions.

Implementation examples are described in the following paragraphs. While some of the following implementation examples are described in terms of example methods, further example implementations may include: the example methods discussed in the following paragraphs implemented by a computing device including a processor configured (e.g., with processor-executable instructions) to perform operations of the methods of the following implementation examples; the example methods discussed in the following paragraphs implemented by a computing device including means for performing functions of the methods of the following implementation examples; and the example methods discussed in the following paragraphs may be implemented as a non-transitory processor-readable storage medium having stored thereon processor-executable instructions configured to cause a processor of a computing device to perform the operations of the methods of the following implementation examples.

Example 1: A method of generating and using dynamic geofence areas in a fleet management system, including receiving information relating to an environmental event, generating a dynamic geofence area, receiving a location from an on-board telematics unit of a vehicle, determining the dynamic geofence state of the vehicle using the received location, and performing an action in response to determining that the vehicle is in a dynamic geofence state.

Example 2: The method of example 1, further including receiving a record identifying a rental status of the vehicle.

Example 3: The method of any of the examples 1 and 2, in which generating a dynamic geofence area includes generating a dynamic geofence area that contains a validity period.

Example 4: The method of any of the examples 1-3, in which generating a dynamic geofence area includes generating a dynamic geofence area that is associated with an environmental event type.

Example 5: The method of any of the examples 1-4, in which generating a dynamic geofence area that contains a type includes generating a dynamic geofence area that contains a weather type.

Example 6: The method of any of the examples 1-5, in which generating a dynamic geofence area includes generating additional data using the received information relating to an environmental event, and generating a dynamic geofence area using the generated additional data.

Example 7: The method of any of the examples 1-6, in which determining the dynamic geofence state of the vehicle using the received location includes determining the dynamic geofence state of the vehicle in response to receiving a notification indicating that a new dynamic geofence area has been generated.

Example 8: The method of any of the examples 1-7, in which determining the dynamic geofence state of the vehicle using the received location includes determining a velocity of the vehicle, and determining the dynamic geofence state of the vehicle using the received location and the determined velocity.

Example 9: The method of any of the examples 1-8, in which determining the dynamic geofence state of the vehicle using the received location includes retrieving previous locations of the vehicle, and determining the dynamic geofence state of the vehicle using the received location and the retrieved locations.

Example 10: The method of any of the examples 1-9, in which determining the dynamic geofence state of the vehicle using the received location and the retrieved locations includes determining that the dynamic geofence state of the vehicle is that the vehicle was in a dynamic geofence area.

Example 11: The method of any of the examples 1-10, in which determining the dynamic geofence state of the vehicle using the received location includes determining that the dynamic geofence state of the vehicle is that the vehicle enters a dynamic geofence area.

Example 12: The method of any of the examples 1-11, in which determining the dynamic geofence state of the vehicle using the received location includes retrieving a user-defined condition, evaluating the user-defined condition, and determining the dynamic geofence state of the vehicle using the evaluated user-defined condition.

Example 13: The method of any of the examples 1-12, in which performing the action in response to determining that the vehicle is in a dynamic geofence state includes determining a rental status of the vehicle, and performing the action in response to determining that the vehicle is in a dynamic geofence state and the determined rental status of the vehicle.

Example 14: The method of any of the examples 1-13, in which performing the action in response to determining that the vehicle is in a dynamic geofence state includes sending an alert to the on-board telematics unit of the vehicle.

Example 15: The method of any of the examples 1-14, in which sending an alert to the on-board telematics unit of the vehicle includes sending an alert to the on-board telematics unit of the vehicle that causes the vehicle to display an alert on the dashboard.

Example 16: The method of any of the examples 1-14, in which sending an alert to the on-board telematics unit of the vehicle includes sending an alert to the on-board telematics unit of the vehicle that causes the vehicle to display an augmented reality alert on a windscreen.

Example 17: The method of any of the examples 1-14, in which sending an alert to the on-board telematics unit of the vehicle includes sending an alert to the on-board telematics unit of the vehicle that causes the vehicle to update its route guidance.

Example 18: The method of any of the examples 1-14, in which sending an alert to the on-board telematics unit of the vehicle includes sending an alert that causes the on-board telematics unit of the vehicle to collect, from sensors of the vehicle, information that is suitable for determining whether the vehicle is driving autonomously, or sending an alert to the on-board telematics unit of the vehicle that causes the vehicle to disable autonomous driving in response to determining that the vehicle is driving autonomously.

Example 19: The method of any of the examples 1-14, in which sending an alert to the on-board telematics unit of the vehicle includes determining that the vehicle is capable of driving autonomously, determining a specific location, and sending an alert to the on-board telematics unit of the vehicle that causes the vehicle to drive autonomously to the specific location.

Example 20: The method of any of the examples 1-19, in which performing the action in response to determining that the vehicle is in a dynamic geofence state includes updating a record associated with the vehicle in the fleet management system.

Example 21: The method of any of the examples 1-20, in which updating a record associated with the vehicle in the fleet management system includes updating the record with the dynamic geofence area type, and updating the record with a notification to inspect the vehicle when it is returned to a rental location.

The foregoing method descriptions and the process flow diagrams are provided merely as illustrative examples and are not intended to require or imply that the blocks of the various aspects must be performed in the order presented. As will be appreciated by one of skill in the art the order of steps in the foregoing aspects may be performed in any order. Words such as "thereafter," "then," "next," etc. are not intended to limit the order of the blocks; these words are simply used to guide the reader through the description of the methods. Further, any reference to claim elements in the singular, for example, using the articles "a," "an" or "the" is not to be construed as limiting the element to the singular.

The various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The hardware used to implement the various illustrative logics, logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Alternatively, some steps or methods may be performed by circuitry that is specific to a given function.

In one or more exemplary aspects, the functions described may be implemented in hardware, software, firmware, or any combination thereof. If implemented in software, the functions may be stored as one or more instructions or code on a non-transitory server-readable or processor-readable storage medium. The steps of a method or algorithm disclosed herein may be embodied in a processor-executable software module, which may reside on a non-transitory processor-readable or server -readable storage medium. Non-transitory processor-readable and server - readable media may be any available storage media that may be accessed by a computer or a processor of a computing device. By way of example, and not limitation, such non-transitory processor-readable or server-readable media may comprise RAM, ROM, EEPROM, CD-ROM or other optical disk storage, magnetic disk storage or other magnetic storage devices, or any other medium that may be used to carry or store desired program code in the form of instructions or data structures and that may be accessed by a server or processor of a server. Disk and disc, as used herein, includes compact disc (CD), laser disc, optical disc, digital versatile disc (DVD), floppy disk, and Blu-ray disc where disks usually reproduce data magnetically, while discs reproduce data optically with lasers. Combinations of the above should also be included within the scope of non-transitory server -readable media. Additionally, the operations of a method or algorithm may reside as one or any combination or set of codes and/or instructions on a non-transitory processor-readable medium and/or non-transitory server-readable medium, which may be incorporated into a computer program product.

The preceding description of the disclosed aspects is provided to enable any person skilled in the art to make or use the present invention. Various modifications to these aspects will be readily apparent to those skilled in the art, and the generic principles defined herein may be applied to other aspects without departing from the scope of the invention as described by the appended claims.

## Claims

1. A method of generating and using dynamic geofence areas in a fleet management system, comprising:
receiving information relating to an environmental event;
generating a dynamic geofence area based on the received information relating to the environmental event;
receiving a location from an on-board telematics unit of a vehicle;
determining a dynamic geofence state of the vehicle using the received location and the generated dynamic geofence area, wherein a dynamic geofence state defines a vehicle's interaction with a dynamic geofence area; and
performing an action corresponding to the determined dynamic geofence state of the vehicle.

2. The method of claim 1, further comprising receiving a record identifying a rental status of the vehicle.

3. The method of claim 1, wherein generating the dynamic geofence area comprises generating a dynamic geofence area that is associated with an environmental event type, optionally, wherein generating the dynamic geofence area that contains a type comprises generating a dynamic geofence area that contains a weather type.

4. The method of claim 1, wherein generating the dynamic geofence area comprises:
generating additional data using the received information relating to the environmental event; and
generating a dynamic geofence area using the generated additional data.

5. The method of claim 1, wherein determining the dynamic geofence state of the vehicle comprises determining the dynamic geofence state of the vehicle in response to receiving a notification indicating that a new dynamic geofence area has been generated.

6. The method of claim 1, wherein determining the dynamic geofence state of the vehicle comprises:
determining a velocity of the vehicle; and
determining the dynamic geofence state of the vehicle using the received location, the generated dynamic geofence area and the determined velocity.

7. The method of claim 1, wherein determining the dynamic geofence state of the vehicle comprises:
retrieving previous locations of the vehicle; and
determining the dynamic geofence state of the vehicle using the received location, the generated dynamic geofence area and the retrieved locations.

8. The method of claim 7, wherein determining the dynamic geofence state of the vehicle using the received location, the generated dynamic geofence area, and the retrieved locations comprises determining that the dynamic geofence state of the vehicle is that the vehicle was in a dynamic geofence area.

9. The method of claim 1, wherein performing the action corresponding to the determined dynamic geofence state comprises:
determining a rental status of the vehicle; and
performing the action corresponding to the determined dynamic geofence state and the determined rental status of the vehicle.

10. The method of claim 1, wherein performing the action corresponding to the determined dynamic geofence state comprises sending an alert to the on-board telematics unit of the vehicle.

11. The method of claim 10, wherein sending the alert to the on-board telematics unit of the vehicle comprises sending an alert to the on-board telematics unit of the vehicle that causes the vehicle to display an augmented reality alert on a windscreen of the vehicle.

12. The method of claim 10, wherein sending the alert to the on-board telematics unit of the vehicle comprises:
sending an alert that causes the on-board telematics unit of the vehicle to collect, from sensors of the vehicle, information that is suitable for determining whether the vehicle is driving autonomously; or
sending an alert to the on-board telematics unit of the vehicle that causes the vehicle to disable autonomous driving in response to determining that the vehicle is driving autonomously.

13. The method of claim 1, wherein performing the action corresponding to the determined dynamic geofence state comprises updating a record associated with the vehicle in the fleet management system, optionally, wherein updating the record associated with the vehicle in the fleet management system comprises:
updating the record with the dynamic geofence area type; and
updating the record with a notification to inspect the vehicle when it is returned to a rental location.

14. A computing system, comprising a processing system configured with processor-executable instructions to perform the method of any one of claims 1 to 13.

15. A non-transitory computer readable storage medium having stored thereon processor-executable software instructions configured to cause a processing system to perform the method of any one of claims 1 to 13.

## Patentansprüche

1. Verfahren zur Erzeugung und Verwendung dynamischer Geofence-Bereiche in einem Flottenverwaltungssystem, umfassend:
Empfangen von Informationen, die ein Umweltereignis betreffen;
Erzeugen eines dynamischen Geofence-Bereichs basierend auf den empfangenen Informationen, die das Umweltereignis betreffen;
Empfangen eines Standorts von einer bordeigenen Telematikeinheit eines Fahrzeugs;
Bestimmen eines dynamischen Geofence-Status des Fahrzeugs mithilfe des empfangenen Standorts und des erzeugten dynamischen Geofence-Bereichs, wobei ein dynamischer Geofence-Status eine Interaktion eines Fahrzeugs mit einem dynamischen Geofence-Bereich definiert; und
Durchführen einer Maßnahme, die dem bestimmten dynamischen Geofence-Status des Fahrzeugs entspricht.

2. Verfahren nach Anspruch 1, ferner umfassend ein Empfangen eines Datensatzes, der einen Mietstatus des Fahrzeugs identifiziert.

3. Verfahren nach Anspruch 1, wobei das Erzeugen des dynamischen Geofence-Bereichs das Erzeugen eines dynamischen Geofence-Bereichs umfasst, der mit einer Umweltereignisart verknüpft ist, wobei das Erzeugen des dynamischen Geofence-Bereichs, der eine Art enthält, optional das Erzeugen eines dynamischen Geofence-Bereichs umfasst, der eine Wetterart enthält.

4. Verfahren nach Anspruch 1, wobei das Erzeugen des dynamischen Geofence-Bereichs Folgendes umfasst:
Erzeugen zusätzlicher Daten mithilfe der empfangenen Informationen, die das Umweltereignis betreffen; und
Erzeugen eines dynamischen Geofence-Bereichs mithilfe der erzeugten zusätzlichen Daten.

5. Verfahren nach Anspruch 1, wobei das Bestimmen des dynamischen Geofence-Status des Fahrzeugs das Bestimmen des dynamischen Geofence-Status des Fahrzeugs als Reaktion auf ein Empfangen einer Benachrichtigung umfasst, die anzeigt, dass ein neuer dynamischer Geofence-Bereich erzeugt wurde.

6. Verfahren nach Anspruch 1, wobei das Bestimmen des dynamischen Geofence-Status des Fahrzeugs Folgendes umfasst:
Bestimmen einer Geschwindigkeit des Fahrzeugs; und
Bestimmen des dynamischen Geofence-Status des Fahrzeugs mithilfe des empfangenen Standorts, des erzeugten dynamischen Geofence-Bereichs und der bestimmten Geschwindigkeit.

7. Verfahren nach Anspruch 1, wobei das Bestimmen des dynamischen Geofence-Status des Fahrzeugs Folgendes umfasst:
Abrufen vorheriger Standorte des Fahrzeugs; und
Bestimmen des dynamischen Geofence-Status des Fahrzeugs mithilfe des empfangenen Standorts, des erzeugten dynamischen Geofence-Bereichs und der abgerufenen Standorte.

8. Verfahren nach Anspruch 7, wobei das Bestimmen des dynamischen Geofence-Status des Fahrzeugs mithilfe des empfangenen Standorts, des erzeugten dynamischen Geofence-Bereichs und der abgerufenen Standorte ein Bestimmen umfasst, dass der dynamische Geofence-Status des Fahrzeugs anzeigt, dass das Fahrzeug in einem dynamischen Geofence-Bereich war.

9. Verfahren nach Anspruch 1, wobei das Durchführen der Maßnahme, die dem bestimmten dynamischen Geoforce-Status entspricht, Folgendes umfasst:
Bestimmen eines Mietstatus des Fahrzeugs; und
Durchführen der Maßnahme, die dem bestimmten dynamischen Geofence-Status und dem bestimmten Mietstatus des Fahrzeugs entspricht.

10. Verfahren nach Anspruch 1, wobei das Durchführen der Maßnahme, die dem bestimmten dynamischen Geoforce-Status entspricht, ein Senden einer Warnung an die bordeigene Telematikeinheit des Fahrzeugs umfasst.

11. Verfahren nach Anspruch 10, wobei das Senden der Warnung an die bordeigene Telematikeinheit des Fahrzeugs das Senden einer Warnung an die bordeigene Telematikeinheit des Fahrzeugs umfasst, die das Fahrzeug dazu veranlasst eine Augmented-Reality-Warnung auf der Windschutzscheibe des Fahrzeugs darzustellen.

12. Verfahren nach Anspruch 10, wobei das Senden der Warnung an die bordeigene Telematikeinheit des Fahrzeugs Folgendes umfasst:
Senden einer Warnung, die die bordeigene Telematikeinheit des Fahrzeugs dazu veranlasst, Informationen von Fahrzeugsensoren zu sammeln, die geeignet sind, um zu bestimmen, ob das Fahrzeug autonom fährt; oder
Senden einer Warnung an die bordeigene Telematikeinheit des Fahrzeugs, die das Fahrzeug dazu veranlasst, autonomes Fahren, als Reaktion auf ein Bestimmen, dass das Fahrzeug autonom fährt, zu deaktivieren.

13. Verfahren nach Anspruch 1, wobei das Durchführen der Maßnahme, die dem bestimmten dynamischen Geofence-Status entspricht, ein Aktualisieren eines mit dem Fahrzeug in dem Flottenverwaltungssystem verknüpften Datensatzes umfasst, wobei das Aktualisieren des mit dem Fahrzeug in dem Flottenverwaltungssystem verknüpften Datensatzes optional Folgendes umfasst:
Aktualisieren des Datensatzes mit der dynamischen Geofence-Bereichsart; und
Aktualisieren des Datensatzes mit einer Benachrichtigung das Fahrzeug bei Rückgabe an einen Mietstandort zu inspizieren.

14. Computersystem, umfassend ein Verarbeitungssystem, das mit prozessorausführbaren Anweisungen konfiguriert ist, um das Verfahren nach einem der Ansprüche 1 bis 13 durchzuführen.

15. Nichtflüchtiges, computerlesbares Speichermedium, auf dem prozessorausführbare Softwarenweisungen gespeichert sind, die dazu konfiguriert sind, ein Verarbeitungssystem dazu zu veranlassen das Verfahren nach einem der Ansprüche 1 bis 13 durchzuführen.

## Revendications

1. Procédé de génération et d'utilis ation de zones de géorepérage dynamique dans un système de gestion de flotte, comprenant :
la réception d'informations relatives à un événement environnemental ;
la génération d'une zone de géorepérage dynamique sur la base des informations reçues relatives à l'événement environnemental ;
la réception d'une position provenant d'une unité télématique embarquée d'un véhicule ;
la détermination d'un état de géorepérage dynamique du véhicule à l'aide de la position reçue et de la zone de géorepérage dynamique générée, dans lequel un état de géorepérage dynamique définit l'interaction d'un véhicule avec une zone de géorepérage dynamique ; et
la réalisation d'une action correspondant à l'état de géorepérage dynamique déterminé du véhicule.

2. Procédé selon la revendication 1, comprenant également la réception d'un enregistrement identifiant le statut de location du véhicule.

3. Procédé selon la revendication 1, dans lequel la génération de la zone de géorepérage dynamique comprend la génération d'une zone de géorepérage dynamique associée à un type d'événement environnemental et, éventuellement, dans lequel la génération de la zone de géorepérage dynamique contenant un type comprend la génération d'une zone de géorepérage dynamique contenant un type météorologique.

4. Procédé selon la revendication 1, dans lequel la génération de la zone de géorepérage dynamique comprend :
la génération de données supplémentaires à l'aide des informations reçues relatives à l'événement environnemental ; et
la génération d'une zone de géorepérage dynamique à l'aide des données supplémentaires générées.

5. Procédé selon la revendication 1, dans lequel la détermination de l'état de géorepérage dynamique du véhicule comprend la détermination de l'état de géorepérage dynamique du véhicule en réponse à la réception d'une notification indiquant qu'une nouvelle zone de géorepérage dynamique a été générée.

6. Procédé selon la revendication 1, dans lequel la détermination de l'état de géorepérage dynamique du véhicule comprend :
la détermination d'une vitesse du véhicule ; et
la détermination de l'état de géorepérage dynamique du véhicule à l'aide de la position reçue, de la zone de géorepérage dynamique générée et de la vitesse déterminée.

7. Procédé selon la revendication 1, dans lequel la détermination de l'état de géorepérage dynamique du véhicule comprend :
la récupération de positions précédentes du véhicule ; et
la détermination de l'état de géorepérage dynamique du véhicule à l'aide de la position reçue, de la zone de géorepérage dynamique générée et des positions récupérées.

8. Procédé selon la revendication 7, dans lequel la détermination de l'état de géorepérage dynamique du véhicule à l'aide de la position reçue, de la zone de géorepérage dynamique générée et des positions récupérées comprend la détermination que l'état de géorepérage dynamique du véhicule indique que le véhicule se trouvait dans une zone de géorepérage dynamique.

9. Procédé selon la revendication 1, dans lequel la réalisation de l'action correspondant à l'état de géorepérage dynamique déterminé comprend :
la détermination d'un statut de location du véhicule ; et
la réalisation de l'action correspondant à l'état de géorepérage dynamique déterminé et au statut de location du véhicule.

10. Procédé selon la revendication 1, dans lequel la réalisation de l'action correspondant à l'état de géorepérage dynamique déterminé comprend l'envoi d'une alerte à l'unité télématique embarquée du véhicule.

11. Procédé selon la revendication 10, dans lequel l'envoi de l'alerte à l'unité télématique embarquée du véhicule comprend l'envoi d'une alerte à l'unité télématique embarquée du véhicule qui provoque l'affichage par le véhicule d'une alerte de réalité augmentée sur le pare-brise du véhicule.

12. Procédé selon la revendication 10, dans lequel l'envoi de l'alerte à l'unité télématique embarquée du véhicule comprend :
l'envoi d'une alerte qui provoque la collecte, par l'unité télématique embarquée du véhicule, d'informations provenant de capteurs du véhicule permettant de déterminer si le véhicule roule de manière autonome ; ou
l'envoi d'une alerte à l'unité télématique embarquée du véhicule, qui provoque la désactivation de la conduite autonome du véhicule en réponse à la détermination que le véhicule roule de manière autonome.

13. Procédé selon la revendication 1, dans lequel la réalisation de l'action correspondant à l'état de géorepérage dynamique déterminé comprend la mise à jour d'un enregistrement associé au véhicule dans le système de gestion de flotte, éventuellement, dans lequel la mise à jour de l'enregistrement associé au véhicule dans le système de gestion de flotte comprend :
la mise à jour de l'enregistrement avec le type de zone de géorepérage dynamique ; et
la mise à jour de l'enregistrement avec une notification d'inspection du véhicule lors de son retour à l'agence de location.

14. Système informatique, comprenant un système de traitement configuré avec des instructions exécutables par processeur pour réaliser le procédé selon l'une quelconque des revendications 1 à 13.

15. Support de stockage non transitoire lisible par ordinateur sur lequel sont stockées des instructions matérielles exécutables par processeur configurées pour amener un système de traitement à réaliser le procédé selon l'une quelconque des revendications 1 à 13.
